# EUROPÄISCHE PATENTSCHRIFT

(11) **EP 3 559 769 B1**
(45) Veröffentlichungstag und Bekanntmachung des Hinweises auf die Patenterteilung: **12.07.2023**
(21) Anmeldenummer: 17832460.4
(22) Anmeldetag: 22.12.2017
(51) Int. Cl.: G05B 23/02, B62D 57/02, G05B 19/048, B25J 9/16

(54) **AUTONOMER MOBILER ROBOTER UND VERFAHREN ZUM STEUERN EINES AUTONOMEN MOBILEN ROBOTERS**
AUTONOMOUS MOBILE ROBOT AND METHOD FOR CONTROLLING AN AUTONOMOUS MOBILE ROBOT
ROBOT MOBILE AUTONOME ET PROCÉDÉ DE COMMANDE D'UN ROBOT MOBILE AUTONOME

(30) Priorität: 22.12.2016 DE 102016125408
(43) Veröffentlichungstag der Anmeldung: 30.10.2019
(73) Patentinhaber: Robart GmbH, 4020 Linz (AT)
(72) Erfinder: ARTES, Harold, 4020 Linz (AT); MASCHER, Erwin, 4020 Linz (AT); ALEXANDROV, Vladimir, 4020 Linz (AT)
(74) Vertreter: Westphal, Mussgnug & Partner, Patentanwälte mbB
(86) Internationale Anmeldenummer: PCT/AT2017/060346
(87) Internationale Veröffentlichungsnummer: WO 2018/112495

(56) Entgegenhaltungen:
- DE-A1-102010 033 768
- US-A1- 2002 103 575

## Beschreibung

### TECHNISCHES GEBIET

Die hier beschriebenen Ausführungsbeispiele betreffen einen autonomen mobilen Serviceroboter wie z.B. einen Roboter zur Bearbeitung einer Oberfläche (Reinigung von Böden), zum Transport von Gegenständen oder zur Überwachung und Inspektion eines Gebiets, sowie ein Verfahren zum Steuern eines solchen autonomen mobilen Roboters.

### HINTERGRUND

In den letzten Jahren finden autonome mobile Roboter, insbesondere Serviceroboter, zunehmend Verwendung in privaten Haushalten wie auch im beruflichen Umfeld. Beispielsweise können autonome mobile Roboter eingesetzt werden zur Reinigung von Bodenflächen, zur Überwachung von Gebäuden, zur Ermöglichung einer standort- und tätigkeitsunabhängigen Kommunikation oder zum Transport von Gegenständen.

Autonome mobile Roboter sind dazu meist mit verschiedensten Sensoren ausgestattet, wie beispielsweise Laserscanner, Ultraschallsensoren oder taktile Sensoren, um Hindernisse in ihrer Umgebung zu erkennen und Kollisionen, z.B. mit Gegenständen oder Menschen, zu vermeiden. Dabei sind Sensoren bekannt, welche auf den Boden ausgerichtet sind, um beispielsweise mögliche Absturzkanten (z.B. Treppen) zu erkennen und so Stürze des Roboters zu vermeiden. Ein Sturz kann zu Beschädigungen des Roboters oder von in der Nähe befindlichen Gegenständen führen. Auch Gefährdungen von Menschen sind bei Stürzen von mobilen Robotern möglich. Durch das Erfassen der Umgebung mittels der Sensoren und anschließendes Auswerten der Daten kann der Roboter potentielle Gefahren rechtzeitig erkennen und Unfälle vermeiden indem er seine Bewegungen entsprechend der Gefahrensituation anpasst.

Mit dem Anspruch immer intelligentere Systeme zu entwickeln und zu vermarkten, steigt auch die Komplexität der in autonomen mobilen Robotern verwendeten Verhaltensroutinen ständig an. Eine steigende Komplexität ist jedoch zumeist auch, wie bei vielen komplexen Softwareapplikationen, mit einer erhöhten Fehleranfälligkeit verbunden. Dies bedeutet, dass der Roboter zwar über Sensoren zur Erkennung einer Gefahrensituation verfügt, jedoch die Steuersoftware beispielsweise aufgrund von Störungen, unerkannten Programmierfehlern oder ungewollter Beeinflussung von außen, nicht angemessen auf die erkannte Gefahrensituation reagiert. Ein Nachweis darüber, dass ein Roboter in allen denkbaren Gefahrensituationen angemessen und richtig reagiert, ist bei zunehmender Komplexität der Steuersoftware mit erheblichem Aufwand verbunden. Ein solcher Nachweis über die funktionale Sicherheit kann bei bestimmten Anwendungen aufgrund gesetzlicher Bestimmungen erforderlich sein. Die Anforderungen an die funktionale Sicherheit ist auch Gegenstand verschiedener Normen (z.B. EN/IEC 61508 und EN/IEC 62061). Die Publikation US 2002/013575 A1 offenbart einen Roboter mit einem Steuermodul, einem Antriebsmodul und einer Bearbeitungseinheit. Die Steuerkommandos des Steuermoduls werden durch eine Einheit zur Überprüfung der Steuerkommandos geprüft. Beim Empfang eines Kommandos überprüft die Überprüfungseinheit anhand Informationen über die Umgebung, welche z.B durch Sensoren gewonnen werden, ob eine Situation vorliegt, bei der das Steuerkommando nicht durchgeführt werden sollte. Ist dies der Fall, leitet sie das Steuerkommando nicht weiter. Sonst wird das Steuerkommando durch die Überprüfungseinheit an das Antriebsmodul weitergeleitet.

Die der Erfindung zugrunde liegende Aufgabe kann folglich unter anderem darin gesehen werden, einen robusten Sicherheitsmechanismus für autonome mobile Roboter bereitzustellen, welcher zuverlässig und nachweisbar Gefahrensituationen erkennen und vermeiden kann.

### ZUSAMMENFASSUNG

Die oben genannte Aufgabe wird durch einen autonomen mobilen Roboter gemäß Anspruch 1 sowie durch ein Verfahren gemäß Anspruch 13 gelöst. Verschiedene Ausführungsbeispiele und Weiterentwicklungen sind Gegenstand der abhängigen Ansprüche.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 beispielhaft verschiedene autonome mobile Roboter sowie verschiedene mögliche Gefahrensituationen.
Figur 2 in einem Blockschaltbild beispielhaft einen autonomen mobilen Roboter.
Figur 3 in einem Ablaufdiagramm ein Verfahren zum Steuern eines autonomen mobilen Roboters.
Figur 4 beispielhaft eine Aufsicht auf eine Unterseite eines autonomen mobilen Roboters.

### DETAILLIERTE BESCHREIBUNG

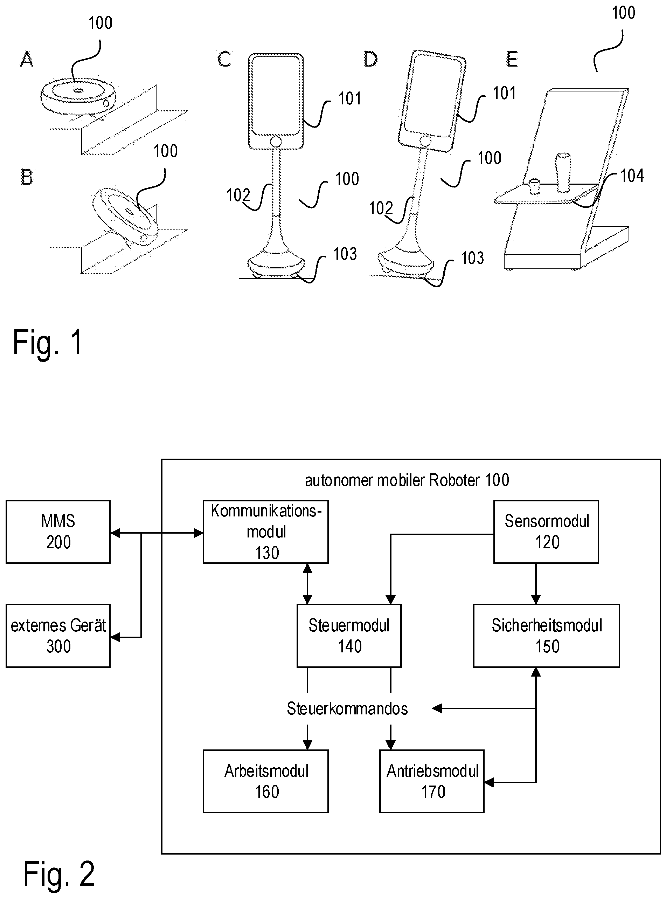

Figur 1 illustriert verschiedene Beispiele eines autonomen mobilen Roboters 100 sowie mögliche Gefahrensituationen. Figur 1A illustriert beispielsweise einen Saugroboter, der dazu ausgebildet ist, Bodenflächen zu reinigen, insbesondere zu saugen. Der Saugroboter bewegt sich dabei meist auf wenigstens drei Rädern voran (in Figur 1A nicht dargestellt). Auf der Unterseite des Saugroboters finden sich zudem meist rotierende Bürsten oder Ähnliches, um Schmutz aufzusammeln während sich der Roboter 100 über die Bodenfläche bewegt. Bei einem Sturz über einer Absturzkante, wie beispielsweise einer Stufe einer Treppe, wie in Figur 1B dargestellt, kann der Saugroboter beschädigt werden. Zudem kann auch ein Schaden an der Bodenfläche, an in der Nähe befindlichen Gegenständen oder an Menschen entstehen, wenn der Roboter 100 darauf fällt oder dagegen stößt. Einige autonome mobile Roboter 100 weisen daher Bodenabstandssensoren (*floor clearance sensors*) auf (in Figur 1 nicht dargestellt), welche eine Absturzkante, wie z.B. eine Treppenstufe, rechtzeitig erkennen können um Abstürze zu vermeiden. Bodenabstandssensoren werden auch als Bodendetektionssensoren (*floor detection sensors*) oder kurz als Bodensensoren (*floor sensors*) bezeichnet.

Figur 1C zeigt beispielhaft einen Telepräsenz-Roboter. Ein Telepräsenz-Roboter weist in der Regel ein Interface 101 (Benutzerschnittstelle, auch *Human-Machine-Interface,* HMI), wie beispielsweise ein Display, Smartphone, Tablet, o.ä. auf. Dieses Interface 101 ist an einem oberen Ende eines senkrechten Armes 102 des Roboters 100 befestigt. Am unteren Ende des senkrechten Armes 102 ist ein Roboterkörper befestigt, welcher ein Antriebsmodul 103 aufweist. Das Antriebsmodul 103 kann beispielsweise einem oder mehrere Motoren und zwei oder mehr Räder aufweisen, mittels welcher sich der Telepräsenz-Roboter vorwärts bewegt. Ein Telepräsenz-Roboter bietet grundsätzlich die Möglichkeit einer einfachen Kommunikation, unabhängig vom Standort und der Tätigkeit des Nutzers, da der Roboter 100 dem Nutzer selbstständig folgen kann. Aufgrund der schmalen Bauform des Roboters 100 sowie dem am oberen Ende des senkrechten Armes 102 befestigten Interface 101, weist ein solcher Telepräsenz-Roboter einen relativ hohen Schwerpunkt auf. Grundsätzlich balanciert sich der Roboter selbst aus. Beispielsweise bei einer Bewegung über stark geneigte Flächen kann der Roboter 100 jedoch leicht kippen, wodurch das Gerät beschädigt werden kann. Auch bei zu starker Beschleunigung oder beim Überfahren von Schwellen oder Stufen kann es zu einem Kippen des Roboters 100 kommen. Auch die umgebende Bodenfläche, in der Nähe befindliche Gegenstände oder Menschen können beschädigt werden, wenn der Roboter kippt 100 oder umfällt. Ein Kippen des Telepräsenz-Roboters ist beispielhaft in Figur 1D dargestellt. Telepräsenz-Roboter können daher Sensoren aufweisen (in Figur 1 nicht dargestellt), welche dazu ausgebildet sind, die Lage (insbes. Neigung), die Beschleunigung und/oder die Winkelgeschwindigkeit des Roboters 100 zu bestimmen. Ebenso können Telepräsenz-Roboter beispielsweise Sensoren aufweisen, welche dazu ausgebildet sind, Schwellen (z.B. Türschwellen) oder Stufen zu detektieren, um das Fahrverhalten des Roboters entsprechend anpassen und somit ein Kippen des Roboters vermeiden zu können.

Figur 1E zeigt beispielhaft einen Assistenzroboter, insbesondere einen Transportroboter. Ein Transportroboter weist meist eine Transportplattform 104 auf, auf welcher zu transportierende Gegenstände, z.B. Teller oder Gläser, platziert werden können. An seiner Unterseite weist der Transportroboter beispielsweise Räder auf (in Figur 1E nicht dargestellt), mit welchen er sich fortbewegen kann. Derartige Roboter 100 können beispielsweise ältere Menschen im Alltag unterstützen und ihnen auf diese Weise ein unabhängiges Leben ermöglichen. Auch in Pflegeheimen können Transportroboter eingesetzt werden, um das Pflegepersonal bei der Arbeit zu unterstützen. Viele weitere Einsatzgebiete sind für Transportroboter denkbar (beispielsweise in Warenlagern, Restaurants, etc.). Bei Transportrobotern ist es in der Regel wichtig, dass eine langsame Beschleunigung gewährleistet wird, damit auf der Transportplattform 104 platzierte Gegenstände nicht umkippen oder sich verschieben. Beispielsweise können im Bereich der Transportplattform 104 Sensoren (in Figur 1E nicht dargestellt) angeordnet werden, welche das Gewicht der zu transportierenden Gegenstände bestimmen. Auch kann mittels Sensoren bestimmt werden, welche Art von Gegenständen sich auf der Transportplattform 104 befinden. Weiterhin ist es grundsätzlich wichtig, dass Kollisionen vermieden werden, um ein Kippen der zu transportierenden Gegenstände oder des gesamten Roboters 100 zu vermeiden. Hierzu kann der Roboter 100 verschiedenste Sensoren aufweisen, welche (ggf. mit dazugehöriger Sensorsignalverarbeitung) dazu ausgebildet sind, stehende oder sich bewegende Objekte oder Personen im Umfeld des Roboters 100 zu detektieren (beispielsweise Laser-Range-Finder, optische Triangulationssensoren, Kameras, etc.).

Es besteht somit grundsätzlich die Möglichkeit, unter Verwendung verschiedenster Methoden und Verfahren den Roboter autonom durch sein Einsatzgebiet zu bewegen, dabei eine mögliche Gefahrensituation für autonome mobile Roboter 100 zu erkennen und Unfälle zu vermeiden, indem auf eine erkannte Gefahrensituation angemessen reagiert wird (d.h. so dass ein Unfall vermieden oder zumindest abgemildert wird). Derartige Roboter 100 weisen üblicherweise eine Steuersoftware zum Steuern des autonomen mobilen Roboters 100 auf. Derartige Steuersoftware, die von einem Prozessor in einem Steuermodul ausgeführt wird, wird jedoch zunehmend komplexer. Durch die steigende Komplexität der Steuersoftware steigt das Risiko von ungewollten Programmierfehlern. Weiterhin hat eine zunehmende Zahl von autonomen mobilen Robotern 100 Zugang zum Internet. Dadurch kann der Roboter 100 beispielsweise gesteuert und kontrolliert werden, obwohl sich der Nutzer nicht in der Nähe des Roboters 100 befindet. Ebenso kann die Firmware, insbesondere die Steuersoftware, des Roboters 100 über das Internet aktualisiert werden. Beispielsweise können Software-Updates automatisch oder auf Aufforderung des Nutzers heruntergeladen werden. Diese Funktionalität wird auch als *Over-the-Air-Programming* (*OTA-Programming*), *OTA-Upgrading* oder *Firmware-Over-the-Air* (FOTA) bezeichnet.

Die Verbindung eines autonomen mobilen Roboters 100 mit dem Internet kann jedoch auch die Gefahr mit sich bringen, dass sich fremde Personen Zugriff auf den Roboter 100 verschaffen (z.B. so genanntes Hacken, Cracken oder *Jailbreaking* des Roboters) und diesen derart beeinflussen, dass dieser in Gefahrensituationen nicht mehr richtig reagiert, wodurch Unfälle entstehen können. Die gesamte Steuersoftware kann im Roboter 100 selbst, bzw. auf einem im Roboter angeordneten Speichermedium gespeichert sein. Es ist jedoch auch möglich, einen Teil der Steuersoftware auf externen Geräten, z.B. Cloud-Servern, zu speichern. Sind Teile der Steuersoftware auf externen Geräten gespeichert, dann sind Teile des Roboters 100 in der Regel nicht mehr echtzeitfähig. Es sind Roboter 100 bekannt, deren Steuersoftware-Algorithmen nicht-deterministische Monte-Carlo-Methoden oder Methoden des maschinellen Lernens, z.B. Deep-Learning (auch *Deep Machine Learning*), verwenden. Als Monte-Carlo-Algorithmen werden randomisierte Algorithmen bezeichnet, die mit einer nach oben beschränkten Wahrscheinlichkeit ein falsches Ergebnis liefern dürfen. Im Vergleich zu deterministischen Algorithmen sind Monte-Carlo-Algorithmen meist effizienter. Deep-Learning bezeichnet in der Regel eine Klasse von Optimierungsmethoden von künstlichen neuronalen Netzen, welche zahlreiche Zwischenlagen (*hidden layers*) zwischen Eingabeschicht und Ausgabeschicht aufweisen und dadurch eine umfangreiche innere Struktur aufweisen. Sowohl bei Monte-Carlo-Algorithmen als auch beim maschinellen Lernen sind Ursache-Wirkung-Zusammenhänge nicht a priori festgelegt und somit schwer nachvollziehbar. Dadurch ist es sehr schwer, eine sichere Funktionsweise des Roboters 100 nachzuweisen und zu garantieren, dass die Steuersoftware des Roboters 100 in einer beliebigen Gefahrensituation richtig und rechtzeitig reagiert, um einen Unfall zu vermeiden. Gleichzeitig ist die Verwendung derartiger neuer Robotersteuerverfahren notwendig, um autonome mobile Roboter 100 intelligenter zu machen. Eine verbesserte Intelligenz ermöglicht es, dass sich der Roboter 100 leichter in das Leben des jeweiligen Nutzers und in seine jeweilige Umgebung einfügt.

Es kann also wichtig oder notwendig sein, ein nachweisbar sicheres Roboterverhalten zu ermöglichen, ohne dabei jedoch die Intelligenz des Roboters 100 einzuschränken. Gemäß einem Ausführungsbeispiel weist ein autonomer mobiler Roboter 100 zusätzlich zu dem Steuermodul (in dem die erwähnte Steuersoftware ausgeführt wird) ein Sicherheitsmodul 150 (*safety module*) auf, das auch als Risikoerkennungsmodul (*risk detection module*) bezeichnet werden kann. Dies ist beispielhaft in dem Blockschaltbild in Figur 2 dargestellt. In den hier beschriebenen Beispielen arbeitet das Sicherheitsmodul 150 unabhängig von dem Steuermodul 140. Grundsätzlich ist das Sicherheitsmodul 150 dazu ausgebildet, das Roboterverhalten unabhängig von dem Steuermodul zu überwachen und Gefahrensituationen zu erkennen. Wenn das Verhalten des Roboters in einer erkannten Gefahrensituation als falsch, gefährlich oder unangemessen eingestuft wird, kann das Sicherheitsmodul 150 geeignete Gegenmaßnahmen (Sicherheitsmaßnahmen) einleiten. Gegenmaßnahmen können beispielsweise darin bestehen, den Roboter 100 anzuhalten oder eine Fahrtrichtung des Roboters 100 zu ändern. Hierbei wird ausgenutzt, dass es in der Regel leichter ist, zu bestimmen, welche Bewegung nicht ausgeführt werden darf, weil sie unsicher ist, als die richtige Bewegung zu bestimmen.

Gemäß dem in Figur 2 dargestellten Beispiel kann der Roboter 100 verschiedene weitere Module aufweisen. Generell kann dabei ein Modul eine eigenständige Baugruppe (Hardware) sein, eine Komponente einer Software zur Steuerung des Roboters 100, welche eine gewünschte Aufgabe (*task*) in einem bestimmten Robotereinsatzgebiet ausführt, oder eine Kombination von beidem (z.B. dedizierte Hardware mit angeschlossenen Peripheriekomponenten und geeigneter Soft- und/oder Firmware). Die für das Verhalten des Roboters 100 zuständige Software (Steuersoftware) kann in einem Steuermodul 140 des Roboters 100 (mittels eines Prozessors, der die Steuersoftware ausführt, und eines Speichers, in dem die Steuersoftware gespeichert ist) ausgeführt werden. Der erwähnte Prozessor kann z.B. in einem Mikrocontroller enthalten sein. Die Ausführung der Steuersoftware kann zumindest teilweise auf ein externes Gerät 300 (z.B. Personal-Computer, Server, etc.) ausgelagert sein, welches beispielsweise in einem Heimnetzwerk (z.B. ein LAN ein WLAN) oder über das Internet (Cloud) erreichbar ist. Das Steuermodul 140 kann alle Funktionen aufweisen, welche dazu benötigt werden, dass sich der autonome mobile Roboter 100 selbstständig in seinem Einsatzgebiet bewegen und Aufgaben erfüllen kann. Wenn ein bestimmter Verfahrensschritt oder ein Teilschritt "vom Roboter" durchgeführt wird, so muss nicht notwendigerweise der gesamte Verfahrensschritt oder Teilschritt ausschließlich von der im Roboter befindlichen Hard- und Software erledigt werden. Es ist auch möglich, dass der Roboter 100 (meist das Steuermodul 140 des Roboters) die Durchführung des Verfahrensschrittes oder Teilschrittes lediglich veranlasst und die tatsächliche Durchführung des Verfahrensschrittes oder Teilschrittes von einer externen Hard- und/oder Software erledigt wird (z.B. von einem externen Computer oder Server 300, der mit dem Roboter über eine Datenverbindung kommuniziert). Des Weiteren sei angemerkt, dass die "Intelligenz" des Roboters auch auf die verschiedenen Module des Roboters verteilt sein kann und nicht notwendigerweise auf ein zentrales Steuermodul konzentriert werden muss. Wenn ein bestimmter Verfahrensschritt oder ein Teilschritt "vom Roboter" durchgeführt wird, so kann der Verfahrensschritt oder Teilschritt von einem Modul des Roboters (z.B. dem Steuermodul 140), von mehreren Modulen gemeinsam und/oder mit Hilfe externer Hard- und Software) erledigt werden.

Das Steuermodul 140 ist dazu ausgebildet, basierend auf Informationen, die von einem Sensormodul 120 und/oder einem Kommunikationsmodul 130 bereitgestellt werden, Steuerkommandos für ein Antriebsmodul 170 und/oder ein Arbeitsmodul 160 zu erzeugen. Darüber hinaus kann die Steuersoftware Funktionen zur Objekterkennung und Arbeitsplanung aufweisen. Weiterhin kann das Steuermodul 140 dazu ausgebildet sein, basierend auf den vom Sensormodul 120 bereitgestellten Informationen gefährliche Situationen zu erkennen und Steuerkommandos zu erzeugen, die geeignet sind, die Gefahr zu vermeiden bzw. abzumildern. Im vorliegenden Beispiel weist der autonome mobile Roboter 100 ein Antriebsmodul 170 auf, welches beispielsweise Elektromotoren, Getriebe und Räder aufweisen kann. Mit Hilfe des Antriebsmoduls 170 kann der Roboter 100 - theoretisch - jeden Punkt seines Einsatzgebiets anfahren. Der Roboter 100 kann des Weiteren ein Kommunikationsmodul 130 aufweisen, um eine Kommunikationsverbindung zu einer Mensch-Maschine-Schnittstelle 200 (HMI) und/oder sonstigen externen Geräten 300 herzustellen. Die Kommunikationsverbindung kann beispielsweise eine direkte drahtlose Verbindung (z. B. Bluetooth), eine lokale drahtlose Netzwerkverbindung (z. B. WiFi oder Zig-Bee) oder eine Internetverbindung (z. B. zu einem Cloud-Service) sein. Die Mensch-Maschine-Schnittstelle 200 kann einem Nutzer beispielsweise Informationen über den autonomen mobilen Roboter 100 zur Verfügung stellen (z.B. Batteriestatus, aktueller Arbeitsauftrag, Karteninformationen, etc.) und kann Nutzerkommandos, z.B. betreffend einen Arbeitsauftrag des autonomen mobilen Roboters 100, entgegennehmen. Beispiele für eine Mensch-Maschine-Schnittstelle 200 sind Tablet-PC, Smartphone, Smartwatch, Computer oder Smart-TV. In einigen Fällen kann die Mensch-Maschine-Schnittstelle 200 auch direkt in den Roboter 100 integriert sein und kann über Tasten, Gesten und/oder Sprachein- und -ausgabe bedient werden. Die zuvor erwähnte externe Hard- und Software kann sich auch zumindest teilweise in der Mensch-Maschine-Schnittstelle 200 befinden. Beispiele für externe Geräte 300 sind Computer und Server, auf denen Berechnungen und/oder Daten ausgelagert werden können, externe Sensoren, die zusätzliche Informationen liefern, oder andere Haushaltsgeräte (z.B. andere Roboter), mit denen der autonome mobile Roboter 100 zusammenarbeitet und/oder Informationen austauscht.

Der Roboter 100 weist des Weiteren ein Arbeitsmodul 160 (Prozessmodul) auf, das einen bestimmten Prozess wie z.B. die Reinigung einer Bodenfläche oder den Transport von Gegenständen durchführt. Das Arbeitsmodul kann beispielsweise ein Reinigungsmodul zur Reinigung einer Bodenfläche (z.B. Bürste, Staubsaugvorrichtung) sein, eine als Tablett gestaltete höhenverstellbare und/oder schwenkbare Transportplattform oder einen Greifarm zum Fassen und Transportieren von Gegenständen. In manchen Fällen, wie beispielsweise bei einem Telepräsenzroboter oder einem Überwachungsroboter, ist ein Arbeitsmodul 160 nicht zwangsläufig erforderlich. So besitzt ein Telepräsenzroboter meist ein mit einer Mensch-Maschine-Schnittstelle 200 gekoppeltes komplexes Kommunikationsmodul 130 mit einer Multimediaeinheit bestehend aus beispielsweise Mikrofon, Kamera und Bildschirm (vgl. Fig. 1, Interface 101), um die Kommunikation zwischen mehreren räumlich weit entfernten Personen zu ermöglichen. Ein anderes Beispiel ist ein Überwachungsroboter, der auf Kontrollfahrten mit Hilfe eines Sensormoduls 120 bestimmte (ungewöhnliche) Ereignisse (z.B. Feuer, Licht, unautorisierte Personen, etc.) erkennen und beispielsweise eine Kontrollstelle entsprechend darüber informieren kann.

Um autonom eine Aufgabe verrichten zu können, kann der Roboter 100 optional auch ein Navigationsmodul aufweisen, mit dem er sich in seiner Umgebung orientieren kann. Das Navigationsmodul kann ein Bestandteil des Steuermoduls 140 sein und ist deshalb in Fig. 2 nicht explizit dargestellt. Zur Orientierung und Navigation kann das Navigationsmodul Navigationsfeatures (*navigation features*, d.h. Merkmale, an denen sich ein Roboter orientieren kann) wie beispielsweise Landmarken (*land marks*, z.B. Möbelstücke, Türrahmen, Ecken eines Raumes, etc.), welche mit Hilfe des Sensormoduls 120 erfasst (d.h. detektiert und lokalisiert) werden können, verarbeiten und zur Navigation durch das Einsatzgebietes des Roboters nutzen. Ein solches Navigationsmodul kann beispielsweise mit einer Hindernisvermeidungsstrategie (*sense and avoid strategy*) und/oder einem SLAM-Algorithmus (*Simultaneous Localization and Mapping*; simultane Lokalisierung und Kartenerstellung) arbeiten und/oder mit einer oder mehreren Karten des Robotereinsatzgebiets. Solche Karte(n) des Robotereinsatzgebiets kann der Roboter während eines Einsatzes neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt worden sein, oder von einem anderen Roboter und/oder Menschen zur Verfügung gestellt werden und kann beispielsweise in einem Speichermodul (in Figur 2 nicht dargestellt) dauerhaft (permanent) gespeichert werden. Ein Speichermodul besteht häufig aus einem nicht-flüchtigen Speicher (z.B. eine Solid-State-Disk, SSD). Alternativ können dauerhaft zu speichernde Karten des Robotereinsatzgebiets auch außerhalb des Roboters gespeichert werden, beispielsweise auf einem Computer im Haushalt des Nutzers des Roboters (z. B. Tablet-PC, Home-Server) oder auf einem über das Internet erreichbaren Computer (z. B. Cloud-Server).

Das Sensormodul 120 kann beispielsweise einen oder mehrere Sensoren zum Erfassen der Umgebung des Roboters 100 und/oder zum Erfassen eines aktuellen Status des Roboters 100 aufweisen. Beispielsweise kann das Sensormodul 120 einen oder mehrere Sensoren zur Messung von Abständen zu Objekten in der Umgebung wie beispielsweise einen optischen und/oder akustischen Sensor, der mittels Triangulation oder Laufzeitmessung eines ausgesandten Signals arbeitet (z.B. Triangulationssensor, Time-Of-Flight-Kamera, Laserscanner, Ultraschallsensoren, etc.) aufweisen. Andere typische Beispiele für geeignete Sensoren sind Kameras zur Erfassung von Bildern der Umgebung, taktile Sensoren, die auf einen physischen Kontakt mit einem Objekt reagieren, Beschleunigungssensoren, Drehratensensoren, Odometer und/oder die bereits erwähnten Bodenabstands-Sensoren. Bodenabstands-Sensoren können beispielsweise mögliche Absturzkanten detektieren. Beispiele für Sensoren zur Erfassung eines aktuellen Status des Roboters 100 sind Stromsensoren zur Bestimmung des Zustandes eines Aktors, insbesondere eines Motors, Radkontaktschalter zum Feststellen, ob der Roboter festen Kontakt mit einer Bodenfläche hat, Lagesensoren zur Erfassung einer Neigung des Roboters 100, Odometer, wie beispielsweise Radumdrehungssensoren (*wheel encoder*), sowie Inertialsensoren, wie beispielsweise Beschleunigungsmesser und Drehratensensoren (beispielsweise in einer inertialen Messeinheit (*inertial measurement unit*, IMU) zusammengefasst) zur Erfassung der Bewegung des Roboters 100.

Des Weiteren kann der autonome mobile Roboter 100 eine Energieversorgung aufweisen, wie beispielsweise eine Batterie (in Figur 2 nicht dargestellt). Die Batterie kann beispielsweise aufgeladen werden, wenn sich der autonome mobile Roboter 100 an einer (in den Figuren nicht dargestellten) Basisstation angedockt ist. Die Basisstation kann beispielsweise mit dem Stromnetz verbunden sein. Der autonome mobile Roboter 100 kann dazu ausgebildet sein, die Basisstation selbstständig anzufahren, wenn ein Laden der Batterie erforderlich ist, oder wenn der Roboter 100 seine Aufgaben abgearbeitet hat.

Das Sicherheitsmodul 150 ist dazu ausgebildet, ausgewählte sicherheitsrelevante Aspekte der autonomen Bewegung des Roboters 100 selbstständig und unabhängig von dem Steuermodul 140 zu überwachen. Das Sicherheitsmodul 150 ist weiterhin dazu ausgebildet, einzugreifen, wenn das Steuermodul 140 in einer Gefahrensituation nicht oder nicht angemessen reagiert. Eine nicht angemessene Reaktion ist eine Reaktion, die die Gefahrensituation nicht vermeidet oder eine andere Gefahrensituation herbeiführen könnte. Eine nicht angemessene Situation kann beispielsweise eine Reaktion sein, welche ein Kippen oder Stürzen des Roboters 100 zur Folge haben kann, wodurch ein weiterer Betrieb des Roboters 100 ohne menschliches Eingreifen nicht mehr möglich ist, oder Schäden am Roboter, an Gegenständen in der Umgebung, am Bodenbelag oder an umstehenden Personen entstehen können. Um die erwähnte Unabhängigkeit von dem Steuermodul 140 zu erreichen, kann das Sicherheitsmodul 150 beispielsweise einen eigenen Prozessor sowie ein Speichermodul aufweisen. Beispielsweise kann das Sicherheitsmodul als separate Baugruppe im Roboter realisiert sein. In dem Speichermodul kann eine Software zur Gefahrenerkennung gespeichert sein, welche von dem Prozessor ausgeführt werden kann. Dabei ist es möglich, dass das Sicherheitsmodul 150 einen eigenen, separaten Prozessor und ein eigenes, separates Speichermodul aufweist. Es ist jedoch ebenfalls möglich, dass sich das Sicherheitsmodul 150 einen Prozessor und oder ein Speichermodul mit einem oder mehrerer der anderen Module des Roboters 100 teilt. In einem Ausführungsbeispiel kann dem Sicherheitsmodul 150 einen Prozessorkern eines Prozessors zugeordnet sein, dessen andere Prozessorkerne von anderen Modulen (wie z.B. das Steuermodul 140) benutzt werden. Beispielsweise können sich das Steuermodul 140 und das Sicherheitsmodul 150 einen Prozessor teilen. Nichtdestotrotz kann die Software des Sicherheitsmoduls 150 unabhängig von der Software des Steuermoduls 140 oder anderer Module arbeiten. Wenn das Sicherheitsmodul 150 einen eigenen Prozessor und ein eigenes Speichermodul aufweist (oder einen Prozessorkern eines Prozessors exklusiv nutzt), kann dies jedoch Störeinflüsse verringern, so dass leichter sichergestellt werden kann, dass das sicherheitsrelevante Sicherheitsmodul 150 zuverlässig und rechtzeitig reagieren kann.

Die Software zur Gefahrenerkennung kann dabei möglichst einfach gestaltet sein, um eine nachvollziehbare und somit nachweisbar zuverlässige Detektion von Gefahrensituationen und Reaktion in Gefahrensituationen zu gewährleisten. Gemäß einem Ausführungsbeispiel ist es auch möglich, dass der autonome mobile Roboter 100 mehrere Sicherheitsmodule 150 aufweist, wobei jedes der Sicherheitsmodule 150 mit seiner entsprechenden Gefahrerkennungssoftware für eine bestimmte Gefahrensituation ausgelegt und auf diese spezialisiert ist. Beispielsweise ist es auch möglich, dass verschiedene Aspekte und Aufgaben des Sicherheitsmoduls 150 in Hardware (d.h. ohne spezielle Software) implementiert sind. Dadurch kann eine sehr schnelle Reaktion auf kritische Ereignisse sichergestellt werden.

Eine Möglichkeit, das Ziel der Einfachheit des Sicherheitsmoduls 150 sowie der Gefahrerkennungssoftware zu erreichen, besteht beispielsweise darin, verschiedene Konzepte der reaktiven und/oder verhaltensbasierten Robotik (*Reactivelbehaviour-based robotics*) im Sicherheitsmodul 150 anzuwenden. Bei derartigen Konzepten wird beispielsweise die Handlungsweise des Roboters 100 lediglich aufgrund aktueller Sensordaten des Sensormoduls 120 bestimmt. Im Unterschied zu solchen Konzepten ist das Sicherheitsmodul 150 jedoch dazu ausgebildet, nur in Ausnahmesituationen, z.B. wenn eine unmittelbare Gefahr erkannt wird und das Steuermodul 140 nicht angemessen darauf reagiert, in die Steuerung des Roboters 100 einzugreifen. Hierfür können beispielsweise (basierend auf den vom Sensormodul 120 gelieferten aktuellen Informationen) verbotene, bzw. potentiell gefährliche Bewegungen bestimmt werden, welche ohne ein Eingreifen des Sicherheitsmoduls 150 zu einem Unfall führen könnten. Das Sicherheitsmodul 150 ist dazu ausgebildet, einzugreifen, wenn der Roboter 100 eine solche verbotene, bzw. gefährliche Bewegung ausführt und/oder ausführen soll, um diese verbotene, bzw. gefährliche Bewegung zu verhindern oder zu verändern. Beispielsweise kann das Sicherheitsmodul 150 mit einem oder mit mehreren Bodenabstandssensoren (enthalten z.B. im Sensormoduls 120) gekoppelt sein. Wenn ein Bodenabstandssensor einen ungewöhnlich hohen Abstand zum Boden anzeigt (z.B. weil der Roboter kurz davor ist, über eine Kante zu fahren, oder weil der Roboter hoch gehoben wurde), kann das Sicherheitsmodul 150 diese Situation als Gefahrensituation beurteilen. Wenn der betreffende Bodenabstandssensor (in Fahrtrichtung gesehen) vorne am Roboter angeordnet ist, dann kann das Sicherheitsmodul 150 die aktuelle Bewegung als potentiell gefährlich einstufen und ein Stoppen der aktuellen Bewegung veranlassen oder diese ändern (z.B. zurückfahren). In diesem Fall sind das Kriterium, das das Sicherheitsmodul 150 zur Detektion einer Gefahrensituation verwendet, und das Kriterium, das das Sicherheitsmodul 150 zur Beurteilung der aktuellen Bewegung (als gefährlich oder nicht gefährlich) verwendet, praktisch das gleiche. Wenn nämlich ein in Fahrtrichtung vorne liegender Absturzsensor einen erhöhten Abstand anzeigt, wird eine Gefahrensituation erkannt und die aktuelle Bewegung als gefährlich beurteilt; das Sicherheitsmodul ,,"überstimmt" das Steuermodul und veranlasst das Antriebsmodul, die aktuelle Bewegung zu stoppen oder zu ändern. Bei der Detektion bestimmter Gefahrensituationen (z.B. wenn ein drohender Sturz über eine Kante erkannt wird) kann das Sicherheitsmodul die aktuelle Bewegung des Roboters also auch sofort stoppen (weil praktisch jegliche Fortsetzung der aktuellen Bewegung als unangemessen/gefährlich einzustufen ist).

Die Steuersoftware des autonomen mobilen Roboters 100 kann dazu ausgebildet sein, sich über eine Verbindung des Kommunikationsmoduls 130 (z.B. zum Internet) zu aktualisieren (Software-Update), oder über diese Verbindung Funktionen hinzuzufügen (Software-Upgrade), um so den Anwendungsbereich des Roboters zu erweitern. Grundsätzlich besteht bei jedem Update oder jedem Upgrade jedoch die Gefahr, Fehler zu der Steuersoftware hinzuzufügen. Zudem stellt die Verbindung des Roboters 100 beispielsweise zum Internet einen möglichen Angriffspunkt für Dritte dar, welche sich so unbefugt Zugang zum Roboter verschaffen, die Kontrolle über diesen übernehmen und dadurch Schaden anrichten können. Aus diesem Grund kann eine Aktualisierung der Gefahrerkennungssoftware des Sicherheitsmoduls 150 beispielsweise nur unter zusätzlichen Sicherheitsmaßnahmen und/oder nur in Ausnahmesituationen durchgeführt werden. Beispielsweise kann gar keine Aktualisierung der Gefahrerkennungssoftware erfolgen, die Aktualisierung kann nur über eine kabelgebundene Kommunikationsschnittstelle erfolgen oder eine Aktualisierung kann nur nach einer vorangegangenen sicheren Authentifizierung der Quelle der aktualisierten Software erfolgen (z.B. nur nach Austausch von Softwarezertifikaten). Wird sowohl die Gefahrerkennungssoftware als auch die Steuersoftware erst nach einer Authentifizierung der Quelle der aktualisierten Software aktualisiert, so kann beispielsweise für die Aktualisierung der Gefahrerkennungssoftware und der Steuersoftware jeweils eine unterschiedliche Authentifizierungsmethode verwendet werden. Grundsätzlich kann jedoch jegliche geeignete Authentifizierungsmethode zum Einsatz kommen.

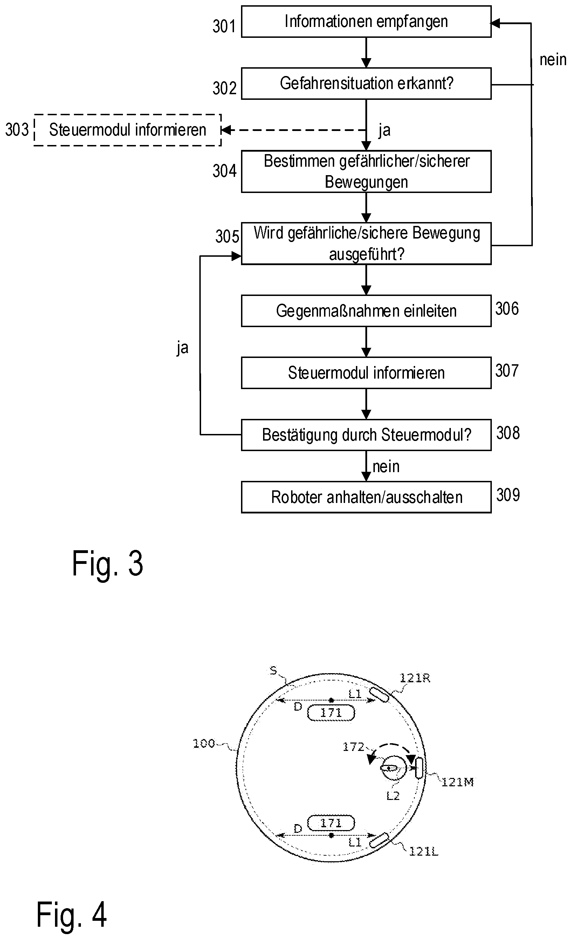

Figur 3 zeigt beispielhaft ein Verfahren zum Steuern eines autonomen mobilen Roboters 100. In einem ersten Schritt 301 kann das Sicherheitsmodul 150 Informationen empfangen. Die Informationen können beispielsweise vom Sensormodul 120 ausgesendet werden, wobei Informationen vom Sensormodul 120 beispielsweise den internen Zustand und/oder die Umgebung des Roboters 100 betreffen können. Zusätzlich oder alternativ kann das Sicherheitsmodul 150 Informationen über die vom Steuermodul 140 an das Antriebsmodul 170 ausgesendeten Steuerkommandos empfangen. Es ist jedoch auch möglich, dass das Sicherheitsmodul 150 zusätzlich oder alternativ Informationen vom Antriebsmodul 170 empfängt, wobei die Informationen vom Antriebsmodul 170 beispielsweise die aktuelle Bewegung (z.B. Richtung und Geschwindigkeit) sowie vom Steuermodul 140 empfangene Steuerkommandos betreffen können. Zusätzlich oder alternativ kann das Sicherheitsmodul 150 Informationen über Steuerkommandos empfangen, welche vom Steuermodul 140 an das Arbeitsmodul 160 ausgesendet werden. Die Informationen können daher beispielsweise Informationen zu der Umgebung des Roboters 100, z.B. die Position von Absturzkanten, Schwellen oder Hindernissen oder einer Bewegung von Hindernissen (z.B. Personen) aufweisen. Die empfangenen Informationen über die Umgebung des Roboters 100 können vom Sicherheitsmodul 150 mit Informationen über eine aktuelle Bewegung oder geplante Bewegungen des Roboters 100 verknüpft werden. Informationen können dabei entweder direkt nach dem Empfang im Sicherheitsmodul 150 verarbeitet werden, und/oder dort zunächst für einen vorgebbaren Zeitraum oder eine vorgebbare Distanz (zurückgelegte Wegstrecke des Roboters 100) gespeichert werden, bevor sie verarbeitet werden.

Zusätzlich können die empfangenen Informationen auch Kartendaten der Umgebung des Roboters 100 betreffen, die beispielsweise von dem Navigationsmodul erstellt und verwaltet werden. In den Kartendaten können beispielsweise Informationen über Absturzkanten oder andere Hindernisse enthalten sein. Der Roboter 100 weiß bei normalem Betrieb, wo auf der Karte er sich zum aktuellen Zeitpunkt befindet.

Anhand der empfangenen Informationen kann das Sicherheitsmodul 150 prüfen, ob eine Gefahrensituation vorliegt (Schritt 302). Eine Gefahrensituation liegt beispielsweise dann vor, wenn sich eine Absturzkante, für den Roboter 100 ungünstiges Gelände (z.B. feuchter, glatter, stark geneigter oder unebener Untergrund) oder ein Hindernis in unmittelbarer Umgebung des Roboters 100 befindet oder sich auf diese(s) zubewegt (z.B. Personen). Wird keine Gefahrensituation erkannt, passiert nichts, und das Sicherheitsmodul 150 fährt weiter mit Schritt 301 fort (Sammeln und Auswerten von Informationen).

Erkennt das Sicherheitsmodul 150 eine Gefahrensituation, kann es zunächst das Steuermodul 140 darüber informieren (Schritt 303). Es ist jedoch nicht zwangsläufig erforderlich, das Steuermodul 140 über die erkannte Gefahrensituation zu informieren. Das Sicherheitsmodul 150 kann auch als "stiller Beobachter" agieren und die Gefahrensituation prüfen ohne das Steuermodul 140 darüber zu informieren. Weiterhin kann das Sicherheitsmodul 150 prüfen, ob das Steuermodul 140 richtig auf die erkannte Gefahrensituation reagiert. Das heißt, das Sicherheitsmodul 150 kann prüfen, ob das Steuermodul 140 das Antriebsmodul 170 derart ansteuert, dass der Roboter 100 auf ein Hindernis (oder eine Absturzkante, etc.) zusteuert (und damit die Gefahrensituation verschlimmert), oder ob der Roboter 100 von der Gefahrensituation weggelenkt, abgebremst oder angehalten wird. Hierfür kann das Sicherheitsmodul 150 zunächst abhängig von der erkannten Gefahrensituation bestimmen, welche Bewegungen grundsätzlich zu einem Unfall des Roboters 100 führen können (Schritt 304). Eine Bewegung die mit hoher Wahrscheinlichkeit zu einem Unfall führen kann, kann beispielsweise als "gefährliche Bewegung" eingestuft werden, wohingegen Bewegungen, welche mit hoher Wahrscheinlichkeit nicht zu einem Unfall führen, als "sichere Bewegungen" eingestuft werden können. Eine gefährliche Bewegung ist beispielsweise eine Bewegung, bei der sich der Roboter 100 direkt auf eine Absturzkante oder ein Hindernis zubewegt. Auch Bewegungen, bei welchen der Roboter 100 ein Hindernis streifen würde und dadurch zum schwanken, fallen oder kippen gebracht werden könnte oder das Hindernis durch die Berührung beschädigen könnte, können als gefährlich eingestuft werden.

Nach dem Einstufen der Bewegungen als sicher oder gefährlich kann das Sicherheitsmodul 150 dann prüfen, ob die aktuelle Bewegung des Roboters 100 eine gefährliche Bewegung oder eine sichere Bewegung darstellt (Schritt 305). Das Sicherheitsmodul 150 kann dabei beispielsweise prüfen, ob sich der Roboter 100 weiterhin auf die Gefahrensituation zubewegt, oder ob er möglicherweise an dem Hindernis vorbei fahren wird, oder die Richtung wechselt und von der Gefahrensituation weg steuert. Hierfür kann das Sicherheitsmodul 150 beispielsweise die Steuersignale auswerten, die vom Steuermodul 140 an das Antriebsmodul 170 gesendet werden. Alternativ oder zusätzlich können jedoch auch direkt die Bewegungen des Antriebsmoduls ausgewertet werden (z.B. Radstellung, Drehgeschwindigkeit der Räder, etc.). Wenn das Sicherheitsmodul 150 feststellt, dass der Roboter 100 keine gefährliche Bewegung (mehr) ausführt, passiert nichts und das Sicherheitsmodul 150 fährt mit Schritt 301 fort. Wenn das Sicherheitsmodul jedoch erkennt, dass der Roboter 100 eine als gefährlich eingestufte Bewegung ausführt, kann es Gegenmaßnahmen (Sicherheitsmaßnahmen) einleiten (Schritt 306), welche die Sicherheit des Roboters 100 sowie umstehender Gegenstände gewährleisten, den Unfall also vermeiden oder zumindest abschwächen sollen. Gegenmaßnahmen sind das Überschreiben der Steuerkommandos des Steuermoduls 140 mit Steuerkommandos des Sicherheitsmoduls 150. Steuersignale des Sicherheitsmoduls 150 sind Richtungs- und/oder Geschwindigkeits-Kommandos, welche den Roboter 100 dazu veranlassen, seine Richtung und/oder seine Geschwindigkeit zu ändern. Unfälle können beispielsweise bereits durch eine Verringerung der Geschwindigkeit vermieden werden, wenn ein bewegliches Objekt den vorgesehenen Weg des Roboters kreuzt. In vielen Fällen kann es beispielsweise ausreichend sein, wenn der Roboter 100 seine Richtung nur geringfügig oder auch stärker verändert, ohne dass die Geschwindigkeit verändert wird. Ebenso ist es denkbar, dass der Roboter 100 in die komplett entgegengesetzte Richtung fährt, also beispielsweise eine 180°-Drehung ausführt oder rückwärts fährt. Führen jedoch weder eine Verringerung der Geschwindigkeit, noch eine Richtungsänderung zu einer Vermeidung der Unfallsituation (z.B. wenn das Hindernis bereits zu nahe ist), kann meist durch ein Anhalten (Nothalt) des Roboters 100 der Unfall noch zuverlässig vermieden werden.

Senden sowohl das Steuermodul 140, als auch das Sicherheitsmodul 150 Steuerkommandos an das Antriebsmodul 170 aus, können die Steuerkommandos des Steuermoduls beispielsweise ignoriert und nur die Steuerkommandos des Sicherheitsmoduls 150 berücksichtigt werden. Dadurch können Steuerkommandos des Steuermoduls 140 sozusagen überschrieben oder überstimmt werden. Solange das Sicherheitsmodul 150 keine Steuerkommandos aussendet, können hingegen die Steuerkommandos des Steuermoduls 140 berücksichtigt werden. Da das Sicherheitsmodul 150 dazu ausgebildet ist, nur in erkannten Gefahrensituationen, insbesondere nur wenn das Steuermodul 140 in der erkannten Gefahrensituation nicht angemessen reagiert, Steuerkommandos auszusenden, werden die Steuerkommandos des Steuermoduls 140 auch nur in solchen Gefahrensituationen von Steuerkommandos des Sicherheitsmoduls 150 überstimmt.

Dabei ist es (optional) möglich, dass das Sicherheitsmodul 150 das Steuermodul 140 über die Gegenmaßnahmen informiert (Schritt 307). Das Steuermodul 140 kann den Empfang dieser Information bestätigen (Schritt 308). Eine Bestätigung kann beispielsweise dadurch erfolgen, dass das Steuermodul 140 geänderte Steuerkommandos an das Antriebsmodul 170 aussendet, welche an die erkannte Gefahrensituation angepasst sind. Es ist jedoch auch möglich, dass das Steuermodul 140 eine Bestätigung direkt an das Sicherheitsmodul 150 aussendet. Auf eine solche Bestätigung hin kann beispielsweise eine vom Sicherheitsmodul 150 unterbrochene Energieversorgung wieder freigegeben werden.

Wenn nach einer vorgegebenen Zeit (z.B. 1 Sekunde) keine oder keine gültige Rückmeldung vom Steuermodul 140 erfolgt, kann das Sicherheitsmodul 150 beispielsweise davon ausgehen, dass ein sicherer Betrieb des Roboters 100 nicht mehr gewährleistet werden kann. In diesem Fall kann der Roboter 100 optional dauerhaft angehalten werden (Schritt 309). In Fällen, in welchen der Roboter 100 zuvor als Gegenmaßnahme des Sicherheitsmoduls 150 bereits angehalten wurde, kann er, beispielsweise ohne noch einmal bewegt zu werden, abgeschaltet werden. Wurden als Gegenmaßnahme Steuerkommandos vom Sicherheitsmodul 150 ausgegeben, welche zu einer Veränderung der Bewegung des Roboters 100 führen, kann der Roboter 100 auf eine fehlende Rückmeldung hin angehalten und ausgeschaltet werden. Ein Neustart kann beispielsweise erst dann wieder möglich sein, wenn dieser durch einen Nutzer aktiv freigegeben wird oder der Roboter 100 durch den Nutzer oder einen Techniker gewartet wurde (z.B. Reinigung von Sensoren).

Gemäß einer Ausführungsform der Erfindung kann das Steuermodul 140 eine Anfrage an das Sicherheitsmodul 150 senden, mit der bewirkt wird, dass eine vom Sicherheitsmodul 150 als gefährlich eingestufte Bewegung dennoch ausgeführt werden kann, um einen weiteren Betrieb des Roboters 100 zu ermöglichen. Die Anfrage kann gestellt werden, nachdem das Steuermodul 140 von dem Sicherheitsmodul 150 über Gegenmaßnahmen zu einer gefährlichen Bewegung informiert wurde. Alternativ oder zusätzlich kann die Anfrage vorsorglich gestellt werden, so dass das Sicherheitsmodul 150 vorab über die geplante Bewegung informiert ist. Hierdurch kann beispielsweise eine Unterbrechung der geplanten Bewegung vermieden werden. Das Sicherheitsmodul 150 kann diese Anfrage prüfen und dem Steuermodul 140 wiederum mitteilen, ob die angefragte Bewegung zugelassen wird. Die Sensoren des Sensormoduls 120 sind bei vielen Robotern nur auf eine Vorwärtsfahrt des Roboters 100 ausgelegt, d.h., Messrichtung in gewöhnlicher Fahrtrichtung, also im Bereich vor dem Roboter 100. Das heißt, sie können keine oder nur sehr eingeschränkte Informationen über den Bereich hinter dem Roboter 100 zur Verfügung stellen. Rückwärtsfahrten des Roboters 100 können daher beispielsweise nur über sehr kurze Strecken als sicher eingestuft werden, z.B. Rückwärtsfahrten über eine Strecke von weniger als 5cm oder weniger als 10cm. Längere Rückwärtsfahrten können daher beispielsweise durch das Sicherheitsmodul 150 nicht zugelassen werden. Beim Anfahren einer Basisstation oder beim Verlassen einer Basisstation, an welcher der Roboter 100 seine Energieversorgung aufladen kann, können jedoch beispielsweise längere Rückwärtsfahrten erforderlich sein. In der Regel kann das Sicherheitsmodul 150 hier davon ausgehen, dass die Basisstation vom Nutzer ordnungsgemäß derart aufgestellt wurde, dass ein sicheres Anfahren und Verlassen der Basisstation möglich ist. Muss der Roboter 100 nun die Basisstation verlassen oder anfahren, und ist hierfür eine längere Rückwärtsfahrt erforderlich, kann das Steuermodul 140 eine entsprechende Anfrage an das Sicherheitsmodul 150 senden. Das Sicherheitsmodul 150 kann dann beispielsweise prüfen, ob der Roboter 100 tatsächlich an der Basisstation steht. Beispielsweise kann hierzu geprüft werden, ob an den entsprechenden Ladekontakten des Roboters 100 eine Spannung anliegt. Eine andere Möglichkeit besteht beispielsweise darin, dass beim Andocken an die Basisstation ein Kontaktschalter geschlossen wird. Das Sicherheitsmodul 150 kann somit prüfen, ob der Kontaktschalter geschlossen ist. Dies sind jedoch lediglich Beispiele. Es kann auf jede andere geeignete Art und Weise geprüft werden, ob der Roboter 100 sich an einer Basisstation befindet. Wenn das Sicherheitsmodul 150 detektiert, dass der Roboter 100 an einer Basisstation steht, kann es die zum Verlassen der Basisstation benötigte Strecke zum Rückwärtsfahren freigeben, obwohl die benötigte Strecke die normal zulässige Strecke einer Rückwärtsfahrt übersteigt. Detektiert das Sicherheitsmodul 150 jedoch, dass der Roboter 100 nicht an einer Basisstation steht, kann lediglich die normal zulässige Strecke einer Rückwärtsfahrt freigegeben werden. Dies ist jedoch lediglich ein Beispiel. Es sind verschiedene andere Situationen denkbar, in welchen das Sicherheitsmodul 150 eine als gefährlich eingestufte Bewegung ausnahmsweise als sicher ansieht und diese freigibt.

Gemäß einer weiteren Ausführungsform der Erfindung ist das Sicherheitsmodul 150 dazu ausgebildet, einen Selbsttest durchzuführen. Dabei kann der Selbsttest beispielsweise einen Lese- und Schreibtest des zum Sicherheitsmodul 150 gehörigen Speichermoduls aufweisen. Schlägt ein solcher Selbsttest fehl, kann der Roboter 100 dauerhaft angehalten und ausgeschaltet werden, bis der Betrieb des Roboters 100 durch einen Nutzer wieder freigegeben wird. Nach dem Fehlschlagen eines Selbsttests kann in der Regel ein sicherer Betrieb des Roboters 100 nicht gewährleistet werden. Ein Selbsttest kann beispielsweise auch durch eine redundante Auslegung verschiedener Komponenten erreicht werden. So können beispielsweise der Prozessor und/oder das Speichermodul des Sicherheitsmoduls 150 zweifach vorhanden sein, wobei auf beiden vorhandenen Prozessoren eine Gefahrerkennungssoftware abgearbeitet werden kann. Solange das Ergebnis beider Prozessoren identisch ist oder lediglich geringe tolerierbare Abweichungen aufweist, kann davon ausgegangen werden, dass das Sicherheitsmodul 150 ordnungsgemäß funktioniert.

Gemäß einer weiteren Ausführungsform der Erfindung kann das Sicherheitsmodul 150 dazu ausgebildet sein, den zuverlässigen Betrieb der Sensoren des Sensormoduls 120 zu überwachen. Dabei kann es ausreichend sein, nur diejenigen Sensoren zu überwachen, welche Informationen an das Sicherheitsmodul 150 liefern. Durch diese Überwachung der Sensoren kann erkannt werden, ob ein Sensor beispielsweise durch einen Defekt oder eine Verschmutzung falsche oder unzuverlässige Daten liefert. Dabei können die zu überwachenden Sensoren dazu ausgebildet sein, selbstständig Funktionsstörungen zu erkennen und diese an das Sicherheitsmodul 150 zu melden. Alternativ oder zusätzlich können die Sensoren dazu ausgebildet sein, nur dann sinnvolle Messdaten an das Sicherheitsmodul 150 zu liefern, solange der Sensor voll funktionsfähig ist. So kann beispielsweise ein Bodenabstandssensor als nicht funktionsfähig erkannt werden, wenn er dauerhaft einen Abstand zum Untergrund von Null (oder Unendlich) liefert, anstatt eines für den Abstand vom Sensor zum Boden typischen Wert. Alternativ oder zusätzlich kann das Sicherheitsmodul 150 die von den Sensoren empfangenen Daten auch auf Konsistenz prüfen. Beispielsweise kann das Sicherheitsmodul 150 prüfen, ob die Sensordaten, welche zur Bestimmung der Bewegung des Roboters 100 verwendet werden, mit den vom Steuermodul 140 ausgesendeten Steuerkommandos konsistent sind. Wird eines oder werden mehrere fehlerhafte Sensorsignale erkannt, kann der Roboter dauerhaft angehalten und ausgeschaltet werden, bis der Nutzer den Betrieb wieder freigibt, da sonst ein sicherer Betrieb des Roboters 100 nicht gewährleistet werden kann.

Gefährliche Bewegungen können vom Sicherheitsmodul 150 auf Basis direkter Sensormessungen bestimmt werden. Direkte Sensormessungen sind beispielsweise Messungen, die von einem Bodenabstandssensor durchgeführt werden. Es ist jedoch auch möglich, gefährliche Bewegungen anhand von interpretierten Sensormessungen zu bestimmen. Interpretierte Sensormessungen sind beispielsweise mittels Bilderkennung erkannte Objekte in Aufnahmen, welche von einer Kamera am Roboter 100 angefertigt wurden. Der Roboter 100 kann beispielsweise dazu ausgebildet sein, Markierungen oder Personen und deren Bewegungen in der Umgebung des Roboters 100 zu erkennen. Markierungen können beispielsweise aufgestellte Warnschilder sein, welche vor frisch gereinigten und somit rutschigen Böden warnen. Ein solches, meist auf dem Boden aufgestelltes Warnschild, kann beispielsweise anhand seiner Form als solches erkannt werden. Es ist jedoch auch möglich, dass die Aufschrift auf dem Warnschild (z.B. "Achtung, Rutschgefahr) oder eine auf dem Warnschild angebrachte Markierung, z.B. ein QR- (*quick response*) Code, erkannt wird. Informationen über erkannte Markierungen können an das Sicherheitsmodul 150 gesendet werden. Dieses kann anhand dieser Informationen die Situation bewerten und ggf. die Kriterien zur Beurteilung der Bewegung des Roboters daran anpassen. Beispielsweise kann das Sicherheitsmodul 150, wenn ein rutschiger Boden erkannt wurde, die als sicher angesehen maximale Geschwindigkeit des Roboters 100 reduzieren.

In Schritt 304 können anstatt gefährlicher Bewegungen jedoch auch sichere Bewegungen bestimmt werden. In Schritt 305 könnte das Sicherheitsmodul 150 dann prüfen, ob der Roboter 100 eine solche sichere Bewegung ausführt. Gegenmaßnahmen können in solchen Fällen eingeleitet werden, in welchen erkannt wird, dass der Roboter 100 eine Bewegung ausführt, welche mit keiner der als sicher erkannten Bewegungen übereinstimmt.

Grundsätzlich können mit dem beschriebenen Verfahren jegliche bekannten Gefahrensituationen erkannt werden. Die bekannten Gefahrensituationen können dabei in Testsituationen gezielt nachgestellt werden, um die Sicherheit des Roboters 100 zu überprüfen. Bei einem solchen Test kann der Roboter 100 beispielsweise gezielt in eine potentielle Gefahrensituation gebracht werden (z.B. Positionieren des Roboters nahe einer Absturzkante). Es kann dann ein Fall simuliert werden, in welchem das Steuermodul 140 falsche und/oder zufällige Steuerkommandos an das Antriebsmodul 170 sendet. Anschließend kann beobachtet werden, ob das Sicherheitsmodul 150 zuverlässig einen Unfall verhindern kann.

Figur 4 illustriert beispielhaft eine Draufsicht auf eine Unterseite eines autonomen mobilen Roboters 100. Figur 4 zeigt dabei beispielhaft einen Reinigungsroboter, wobei das Reinigungsmodul des Roboters der Übersichtlichkeit halber nicht dargestellt ist. Der dargestellte Roboter 100 weist zwei zum Antriebsmodul 170 gehörige Antriebsräder 171 und ein Frontrad 172 auf. Das Frontrad 172 kann beispielsweise ein passives Rad sein, welches selber keinen Antrieb besitzt und sich lediglich aufgrund der Bewegung des Roboters 100 über den Boden mitbewegt. Das Frontrad 172 kann dabei um eine Achse, welche im Wesentlichen senkrecht zum Boden steht, um 360° drehbar sein (die Drehrichtung ist in Figur 4 durch einen gestrichelten Pfeil angedeutet). Die Antriebsräder 171 können jeweils mit einem elektrischen Antrieb (z.B. Elektromotor) verbunden sein. Durch die Drehung der Antriebsräder 171 bewegt sich der Roboter 100 vorwärts. Der Roboter 100 weist weiterhin Bodenabstandssensoren 121 auf. In dem in Figur 4 dargestellten Beispiel weist der Roboter 100 drei Bodenabstandssensoren 121R, 121M, 121L auf. Ein erster Bodenabstandssensor 121R befindet sich beispielsweise auf der rechten Seite des Roboters 100 (in Fahrtrichtung gesehen). Dabei muss der erste Bodenabstandssensor 121R nicht auf der Mittelachse x angeordnet sein, welche den Roboter 100 gleichmäßig in einen vorderen Teil und einen hinteren Teil teilt. Der erste Bodenabstandssensor 121R kann beispielsweise leicht von der Mittelachse x aus gesehen nach vorne angeordnet sein. Ein zweiter Bodenabstandssensor 121L befindet sich beispielsweise auf der linken Seite des Roboters 100 (in Fahrtrichtung gesehen). Dabei muss der zweite Bodenabstandssensor 121L ebenfalls nicht auf der Mittelachse x angeordnet sein. Der zweite Bodenabstandssensor 121L kann ebenso leicht von der Mittelachse x aus gesehen nach vorne angeordnet sein. Ein dritter Bodenabstandssensor 121M kann beispielsweise mittig vorne am Roboter 100 angeordnet sein. Beispielsweise ist vor jedem Rad zumindest ein Bodenabstandssensor 121 so angeordnet, dass bei einer Vorwärtsfahrt eine Absturzkante detektiert wird, bevor das Rad über diese fährt.

Die Bodenabstandssensoren 121 sind dazu ausgebildet, den Abstand des Roboters 100 zum Untergrund zu detektieren, oder zumindest dazu ausgebildet, zu detektieren, ob in einem bestimmten Abstandsintervall eine Bodenfläche vorhanden ist. Während des normalen Betriebs des Roboters 100 liefern die Bodenabstandssensoren 121 in der Regel verhältnismäßig gleichmäßige Werte, da sich der Abstand der Bodenabstandssensoren 121 und somit des Roboters 100 zum Untergrund nur wenig verändert. Insbesondere bei glatten Böden bleibt der Abstand zum Untergrund meist weitgehend gleich. Geringfügige Abweichungen der Werte können sich beispielsweise auf Teppichen ergeben, auf welchen die Antriebsräder 171 und das Frontrad 172 einsinken können. Dadurch kann sich der Abstand des Roboterkörpers mit den Bodenabstandssensoren 121 zum Untergrund verringern. Absturzkanten, wie beispielsweise Treppenstufen, können beispielsweise erkannt werden, wenn sich die von wenigstens einem der Bodenabstandssensoren 121 gelieferten Werte plötzlich stark erhöhen. Beispielsweise kann eine Absturzkante erkannt werden, wenn sich der von wenigstens einem Bodenabstandssensor 121 gemessene Wert um mehr als einen vorgegebenen Grenzwert erhöht. Die Bodenabstandssensoren 121 können beispielsweise einen Sender für ein optisches oder akustisches Signal sowie einen Empfänger aufweisen, der dazu ausgebildet ist die Reflexion des ausgesandten Signales zu detektieren. Mögliche Messverfahren weisen das Messen der Intensität des vom Boden reflektierten Signals, Triangulation oder das Messen der Laufzeit des ausgesendeten Signals und dessen Reflexion auf. Gemäß einer Ausführungsform der Erfindung bestimmt ein Bodenabstandssensor 121 beispielsweise nicht den genauen Abstand des Sensors zum Untergrund, sondern liefert lediglich ein boolesches Signal, das anzeigt, ob der Untergrund innerhalb eines vorgegebenen Abstands detektiert wird (z.B. Untergrund detektiert in einem Abstand von z.B. maximal 5cm zum Sensor 121).

Typische von einem autonomen mobilen Roboter ausgeführte Bewegungen weisen eine Vorwärtsbewegung, eine Drehbewegung nach rechts oder links und Kombinationen aus diesen Bewegungen auf. Wenn sich der Roboter 100 beim Ausführen einer solchen Bewegung auf eine Absturzkante zubewegt, wird diese zumindest von einem der Bodenabstandssensoren 121 detektiert. Aus einfachen geometrischen Überlegungen lassen sich dadurch diejenigen Bewegungen ermitteln, welche zu einem Unfall (in diesem Fall Absturz) des Roboters 100 führen können. Löst beispielsweise der erste oder der zweite Bodenabstandssensor 121R, 121L aus, welche seitlich am Roboter 100 angeordnet sind, dann darf sich der Roboter 100 danach nur noch maximal um eine erste Strecke L1 vorwärts bewegen, wobei die erste Strecke L1 dem Abstand zwischen dem entsprechenden Antriebsrad 171 (Radauflagepunkt) und dem Bodenabstandssensor 121R, 121L entspricht. Löst beispielsweise der dritte Bodenabstandssensor 121M aus, welcher sich vorne am Roboter 100 befindet, dann darf sich der Roboter 100 danach nur noch maximal um eine zweite Strecke L2 vorwärts bewegen, wobei die zweite Strecke dem Abstand zwischen dem Frontrad 172 (Radauflagepunkt) und dem dritten Bodenabstandssensor 121M entspricht. Der Roboter 100 muss somit in der Lage sein, aus voller Fahrt heraus eine Absturzkante zu detektieren, ein Steuersignal zum Abbremsen zu erzeugen, und noch vor der Absturzkante (also innerhalb der ersten bzw. zweiten Strecke L1, L2) zum Stehen zu kommen. Hierbei sollten insbesondere die Reaktionszeiten der einzelnen benötigten Komponenten, also z.B. des Sensormoduls 120, des Steuermoduls 140, des Sicherheitsmoduls 150 und des Antriebsmoduls 170, sowie auch die Geschwindigkeit des Roboters 100, die mögliche (negative) Beschleunigung zum Abbremsen des Roboters 100 und der hiermit verbundene Bremsweg berücksichtigt werden. Beispielsweise kann das Sicherheitsmodul 150 dazu ausgebildet sein, nur eine Rückwärtsbewegung des Roboters 100 zuzulassen, solange wenigstens einer der Bodenabstandssensoren 121 ausgelöst ist. Ein Bodenabstandssensor löst aus, wenn detektiert wird, dass der Bodenabstand größer ist als ein zulässiger Maximalwert.

In dem in Figur 4 dargestellten Beispiel ist die zweite Strecke L2 kürzer als die ersten Strecken L1. Um nach einem Auslösen des dritten Bodenabstandssensors 121M trotzdem sichergehen zu können, dass der Roboter 100 noch rechtzeitig vor einer Absturzkante angehalten wird, kann das Sicherheitsmodul 150 beispielsweise dazu ausgebildet sein, ein Steuersignal zum Stoppen des Roboters 100 auszugeben, sobald der dritte Bodenabstandssensor 121M auslöst. Das Sicherheitsmodul 150 kann beispielsweise nicht erst das korrekte Verhalten des Steuermoduls 140 prüfen, da dies zu viel Zeit in Anspruch nehmen könnte. Erst nach dem Anhalten des Roboters 100 kann das Sicherheitsmodul 150 dann beispielsweise prüfen, ob das Steuermodul 140 ebenfalls der erkannten Situation angemessene Steuerkommandos an das Antriebsmodul 170 aussendet. Angemessene Steuerkommandos in einer solchen Situation können beispielsweise Kommandos zum Anhalten des Roboters, zum Rückwärtsfahren oder zum Durchführen einer Drehung von der Absturzkante weg aufweisen. Erkennt das Sicherheitsmodul 150, dass das Steuermodul 140 angemessene Steuerkommandos aussendet, so kann es die Kontrolle über den Roboter 100 vollständig beim Steuermodul 140 belassen, bzw. an dieses zurückgeben. Erkennt das Sicherheitsmodul 150 jedoch, dass das Steuermodul 140 Steuerkommandos zum Durchführen einer gefährlichen Bewegung (z.B. vorwärtsfahren) ausgibt, so kann es die Kontrolle über den Roboter behalten, bzw. übernehmen. Wie bereits weiter oben beschrieben, kann das Sicherheitsmodul 150 dann beispielsweise weiterhin den Befehl zum Anhalten des Roboters 100 geben, die Energieversorgung zum Antriebsmodul 170 trennen oder Steuerkommandos ausgeben, welche die Steuerkommandos des Steuermoduls 140 überstimmen und eine sichere Bewegung des Roboters 100 bedingen (z.B. Durchführen einer Rückwärtsfahrt).

Beim Auslösen des ersten oder des zweiten Bodenabstandssensors 121R, 121L kann es beispielsweise ausreichend sein, eine Reaktion des Steuermoduls 140 auf die Gefahrensituation hin abzuwarten, da mehr Zeit zur Verfügung steht, bis der Roboter 100 zum Stillstand kommen muss, um einen Unfall abzuwenden. Das Sicherheitsmodul 150 kann in einem solchen Fall beispielsweise abwarten, bis der Roboter 100 eine dritte Strecke L3 zurückgelegt hat (z.B. mit L3 = L1 - L2). Zu diesem Zeitpunkt hat der Roboter 100 dann nur noch die für die zweite Strecke L2 benötigte Zeit zur Verfügung, um einen Unfall zu vermeiden. Während der für die dritte Strecke L3 benötigten Zeit kann das Sicherheitsmodul 150 das Steuermodul 140 somit noch gewähren lassen, ohne dessen Steuerkommandos zu überschreiben oder den Roboter 100 anzuhalten. Reagiert das Steuermodul 140 während dieser Zeit angemessen, ist ein Einschreiten des Sicherheitsmoduls 150 nicht erforderlich, und es bleibt passiv. Ob die dritte Strecke L3 bereits zurückgelegt wurde, kann beispielsweise auf Basis der möglichen Maximalgeschwindigkeit des Roboters 100 mit Hilfe der vergangenen Zeit und/oder mit Hilfe von Odometern bestimmt werden. Das Sicherheitsmodul 150 kann den Roboter 100 beispielsweise anhalten, wenn das Steuermodul 140 nicht innerhalb von 10ms nach der Detektion einer Absturzkante durch den ersten oder zweiten Bodenabstandssensor 121R, 121L den Roboter 100 anhält und/oder von der Absturzkante weg steuert.

Aus Kostengründen weisen Roboter 100 häufig nur, wie in Figur 4 dargestellt, Bodenabstandssensoren 121 im vorderen Bereich des Roboters 100 auf, so dass Absturzkanten nur bei einer Vorwärtsfahrt des Roboters 100 erkannt werden können. Da sich der Roboter 100 überwiegend in Vorwärtsrichtung fortbewegt, ist dies in der Regel ausreichend, um einen sicheren Betrieb des Roboters 100 im Hinblick auf Absturzkanten zu gewährleisten. In manchen Situationen kann eine Bewegung in Vorwärtsrichtung jedoch durch Hindernisse oder Absturzkanten blockiert sein. In solchen Situationen kann es unvermeidlich sein, dass der Roboter 100 als Ganzes oder zumindest mit einem seiner Antriebsräder 171 rückwärts fährt, um sich aus dieser Situation zu befreien. Der Roboter 100 kann dabei jedoch lediglich so weit sicher rückwärts fahren, wie er seinen Weg in dieser Richtung kennt. Kennt er den Weg nicht, besteht aufgrund der im hinteren Teil des Roboters 100 fehlenden Bodenabstandssensoren die Gefahr eines Unfalls, da er beispielsweise hinter sich liegende Absturzkanten nicht erkennen kann. Die zuletzt vom Roboter 100 zurückgelegte Strecke kann beispielsweise als Gerade approximiert werden. Eine Rückwärtsfahrt kann beispielsweise für eine vierte Strecke D als sicher erkannt werden, wobei D der Abstand zwischen den Antriebsrädern 171 und dem Umkreis S ist, auf welchem die Bodenabstandssensoren 121 im vorderen Bereich des Roboters 100 angeordnet sind. Wenn sich der Roboter zuletzt um weniger als die vierte Strecke D vorwärts bewegt hat, darf er sich um eine Strecke zurück bewegen, welche nicht größer ist als die zuletzt in Vorwärtsrichtung zurückgelegte Strecke. Bei kombinierten Vorwärts- und Rückwärtsbewegungen kann die tatsächlich zurückgelegte Strecke ermittelt und für eine evtl. notwendige Rückwärtsfahrt berücksichtigt werden.

Das Sicherheitsmodul 150 kann beispielsweise dazu ausgebildet sein, direkt nach dem Einschalten des Roboters 100 keine Rückwärtsbewegung zuzulassen, da ihm möglicherweise keine Informationen über seine Umgebung vorliegen und ihm möglicherweise nicht bekannt ist, ob sich hinter ihm eine Absturzkante befindet. Beispielsweise könnte der Roboter 100 von einem Nutzer auf einem Tisch nahe der Tischkante, oder auf einer Treppenstufe oder Treppenabsatz abgestellt worden sein. Das Sicherheitsmodul 150 kann dabei eine Rückwärtsbewegung des Roboters 100 beispielsweise auch dann blockieren, wenn die Vorwärtsrichtung durch ein Hindernis oder eine Absturzkante blockiert ist. Wie bereits weiter oben beschrieben kann das Steuermodul 140 beispielsweise eine entsprechende Anfrage an das Sicherheitsmodul 150 senden, wenn es den Roboter 100 rückwärts von einer Basisstation herunter steuern will. Wenn das Sicherheitsmodul 150 auf eine solche Anfrage verifiziert, dass sich der Roboter 100 tatsächlich an der Basisstation befindet, kann es die zum von der Basisstation Herunterfahren benötigte Strecke zum Rückwärtsfahren freigeben.

Die Bewegung des Roboters 100 kann mittels verschiedenster Sensoren, beispielsweise mittels Odometern (z.B. Radkodierer, *wheel encoder*) bestimmt und/oder basierend auf den vom Steuermodul 140 erzeugten und vom Sicherheitsmodul 150 protokollierten Steuerkommandos berechnet werden. Hierbei kann beispielsweise der vom Roboter 100 zurückgelegte Weg in einem vorbestimmten Zeitintervall und/oder Bewegungsintervall gespeichert werden. Zusätzlich kann beispielsweise auch die Position bzw. der Weg der Bodenabstandssensoren 121 gespeichert werden, um damit eine sichere Fläche besser abschätzen zu können.

Gemäß einer Ausführungsform der Erfindung kann der Umkreis S, auf welchem die Bodenabstandssensoren 121 angeordnet sind, als sicher befahrbare Fläche angesehen werden, wenn sich der Roboter 100 zuvor um eine Strecke, die zumindest größer als der Radius des Umkreises S ist, vorwärts bewegt hat. Das Sicherheitsmodul 150 kann in diesem Fall dazu ausgebildet sein, den Roboter 100 anzuhalten, wenn es (z.B. auf Basis der Steuerkommandos und/oder einer Odometermessung) detektiert, dass der Roboter 100 während einer Rückwärtsfahrt (und hiermit kombinierten kurzen Vorwärtsbewegungen) den Umkreis S durch eine rückwärts gerichtete Bewegung verlässt.

Um Kollisionen zu vermeiden, können mehrere Sensoren zur Detektion von Hindernissen gemeinsam genutzt werden. Beispielsweise weist das Sensormodul 120 optische Sensoren auf (z.B. Laserscanner), welche dazu ausgebildet sind, Hindernisse kontaktlos zu erkennen. Das Sensormodul 120 kann beispielsweise auch taktile Sensoren aufweisen, welche dazu ausgebildet sind optisch schwer zu detektierende Hindernisse (z.B. Glastüren) bei einer Berührung zu erkennen. Ein taktiler Sensor kann beispielsweise einen Kontaktschalter aufweisen, welcher dazu ausgebildet ist zu schließen, wenn ein Hindernis berührt wird. Ein taktiler Sensor kann beispielsweise weiterhin einen Federweg aufweisen, welcher es dem Roboter 100 erlaubt abzubremsen, bevor der Hauptkörper des Roboters 100 gegen das Hindernis prallt. In einem solchen Fall verhält sich das Sicherheitsmodul 150 analog zu dem Verhalten beim Auslösen eines Bodenabstandssensors 121 bei Detektion einer Absturzkante.

Das Sicherheitsmodul 150 kann beispielsweise dazu ausgebildet sein, Hindernisse in der Nähe des Roboters zu überwachen. Wenn Hindernisse innerhalb eines vorgegebenen Abstands zum Roboter 100 detektiert werden, kann das Sicherheitsmodul 150 beispielsweise Bewegungen mit einer Geschwindigkeit oberhalb einer Grenzgeschwindigkeit verhindern. Der vorgegebene Abstand kann von der Richtung abhängig sein, in welcher das Hindernis detektiert wird. Beispielsweise ist ein hinter dem Roboter 100 detektiertes Hindernis in der Regel nicht einschränkend für eine Vorwärtsbewegung des Roboters 100. Die Grenzgeschwindigkeit kann vom Abstand zum Hindernis und/oder von der Richtung in welcher das Hindernis detektiert wird abhängig sein.

Das Sensormodul 100 kann beispielsweise auch Sensoren aufweisen, die dazu ausgebildet sind, Lebewesen, insbesondere Personen oder Haustiere und deren Bewegungen zu detektieren. Die Sensoren können hierfür beispielsweise eine Kamera aufweisen, welche dazu ausgebildet ist Bilder der Umgebung aufzunehmen. Beispielsweise mittels Gesichtserkennung und/oder anhand von ausgestrahlter Infrarotstrahlung (aufgrund der Körpertemperatur von Personen oder Tieren) können dann anhand der aufgenommenen Bilder Personen und/oder Tiere erkannt werden. Die Position eines Objektes kann dabei zu einem einzelnen Zeitpunkt oder aber auch zu mehreren aufeinanderfolgenden Zeitpunkten bestimmt werden. Dadurch ist es möglich, zu bestimmen, ob und mit welcher Geschwindigkeit sich das Objekt bewegt. Aus einer aktuellen Geschwindigkeit des Objekts kann dann eine mögliche Position dieses Objekts zu einem zukünftigen Zeitpunkt bestimmt werden. Auf Basis dieser Daten kann das Sicherheitsmodul 150 dann eine Gefährdung des Objektes und/oder des Roboters 100 bestimmen, und eine Bewegung des Roboters 100 in Richtung der bestimmten zukünftigen Position verhindern.

Das Sicherheitsmodul 150 kann auch dazu ausgebildet sein, wenn ein Objekt erkannt wird, Geschwindigkeiten und/oder Beschleunigungen, welche größer sind als ein vorgegebener Grenzwert, zu verhindern, unabhängig davon, ob, mit welcher Geschwindigkeit und in welche Richtung sich das Objekt bewegt. Durch eine Begrenzung der Maximalgeschwindigkeit erhöht sich beispielsweise die Zeit, welche dem Roboter 100 zur Verfügung steht, um auf unerwartete Bewegungen des Objektes zu reagieren. Gleichzeitig wird durch eine Begrenzung der Maximalgeschwindigkeit die Gefahr von Verletzungen von Personen oder Tieren und Schäden am Roboter oder Objekten reduziert, da die Verringerung der Geschwindigkeit zu einer Verringerung der kinetischen Energie des Roboters 100 führt. Durch eine Begrenzung der Beschleunigung des Roboters 100 können Personen in der Umgebung das Verhalten des Roboters 100 besser einschätzen und können besser auf die Bewegungen des Roboters reagieren, wodurch sich die Gefahr für Unfälle ebenfalls verringert.

Ein Sensormodul 120 eines autonomen mobilen Roboters 100, beispielsweise eines Transportroboters, kann beispielsweise Sensoren aufweisen, die dazu ausgebildet sind, zu detektieren, ob und welche Gegenstände (z.B. Gläser oder Teller) der Roboter 100 transportiert. Anhand dieser Informationen können die Bewegungen des Roboters angepasst werden. Beispielsweise kann ein Roboter 100 schneller beschleunigen und sich mit größerer Geschwindigkeit fortbewegen, wenn er nichts transportiert. Transportiert er beispielsweise flache Gegenstände wie Teller, kann er in der Regel schneller beschleunigen als, wenn er Gläser oder Flaschen transportiert.

Ein autonomer mobiler Roboter 100, z.B. ein Telepräsenz-Roboter, kann im Gegensatz zu dem in den Figuren 1A, 1B und 4 dargestellten Roboter eine hohe und schlanke Bauform aufweisen (vgl. Figuren 1C und D). Aufgrund dieser Bauform kann der Roboter 100 jedoch anfällig für Kippbewegungen sein. Entscheidend für die Stabilität des Roboters 100 ist hierbei die Position seines Schwerpunktes, seine Kontaktpunkte mit der Bodenfläche sowie die auf den Roboter 100 wirkenden Kräfte und Drehmomente. Die Kontaktpunkte sind beispielsweise die Antriebsräder des Antriebsmoduls 170. Die Kräfte und Drehmomente sind beispielsweise durch die Schwerkraft, die Kräfte bei der Beschleunigung des Roboters 100 auf einer ebenen oder einer geneigten Bodenfläche, externe auf den Roboter 100 wirkende Kräfte, wie beispielsweise Stöße, sowie durch die Position des Roboters auf einer ebenen oder geneigten Bodenfläche bestimmt. Verfahren zum Analysieren der Bedingungen bzgl. der Stabilität der Lage des Roboters 100 sind allgemein bekannt und werden daher an dieser Stelle nicht weiter erläutert.

Ob die aktuelle Lage des Roboters 100 stabil ist, kann beispielsweise mittels Messungen der aktuellen Beschleunigung und der Winkelgeschwindigkeit einer IMU (Inertiale Messeinheit, engl.: inertial measurement unit) an zumindest einer Stelle des Roboters 100 bestimmt werden. Die IMU kann beispielsweise in der Nähe des Roboter-Schwerpunkts angeordnet sein. Weiterhin kann die Lage des Roboters 100 bestimmt werden, also beispielsweise ob sich der Roboter 100 auf einer ebenen oder einer geneigten Oberfläche befindet. Ein auf einer geneigten Oberfläche stehender Roboter 100 neigt grundsätzlich eher dazu umzukippen (Verlust der Stabilität der Lage des Roboters 100, vgl. Figuren 1C und D). Ebenso kann die Position des Schwerpunktes des Roboters 100 bestimmt werden. Beispielsweise kann bei Telepräsenz-Robotern die am oberen Ende angebrachte Multimediaeinheit 101 in ihrer Höhe variiert werden, um sie an die Bedürfnisse des Nutzers anzupassen (z.B. Nutzer steht oder Nutzer sitzt). Dadurch verändert sich die Lage des Roboter-Schwerpunktes, wodurch sich wiederum die Dynamik und Lagestabilität des Roboters 100 verändern.

Das Sicherheitsmodul 150 kann dazu ausgebildet sein sicherzustellen, dass das Steuermodul 140 keine Steuerkommandos an das Antriebsmodul 170 sendet, welche die Stabilität der Lage des Roboters 100 gefährden. Hierfür kann das Sicherheitsmodul 150 beispielsweise dazu ausgebildet sein, zu bestimmen, welche Kräfte und Drehmomente aufgrund des vom Steuermodul 140 ausgegebenen Steuerkommandos auf den Roboter 100 wirken können, und ob diese mit der Stabilität der Lage des Roboters 100 vereinbar sind. Wenn das Sicherheitsmodul 150 ein Steuerkommando erkennt, welches die Stabilität der Lage des Roboters 100 gefährden könnte, kann es beispielsweise Gegenmaßnahmen (Sicherheitsmaßnahmen) einleiten. Gegenmaßnahmen können beispielsweise das Anhalten den Roboters 100 aufweisen. Zudem kann das Steuermodul 140 über die Gegenmaßnahmen informiert werden. Ein Beispiel für ein Steuerkommando, welches die Stabilität der Lage des Roboters 100 gefährden könnte, sind zu schnelle Beschleunigungen des Roboters 100, da diese den Roboter 100 zum Kippen bringen können. Maximal mögliche Beschleunigungen können basierend auf der Analyse der Stabilität des Roboters 100 verhältnismäßig einfach bestimmt werden. Die maximal möglichen Beschleunigungen sind beispielsweise abhängig von einer Lage des Roboters 100 (Neigung), der Richtung der Beschleunigung bezüglich der Position der Auflagepunkte (Vorwärtsbeschleunigung, Bremsen, Fahrt auf Kreisbogen, etc.) und der Lage des Roboter-Schwerpunkts. So kann ein Roboter 100 beispielsweise auf einer Rampe zum Herunterfahren stärker beschleunigen als zum Herauffahren. Bei einem niedrigen Roboter-Schwerpunkt kann der Roboter 100 im Allgemeinen stärker beschleunigen als bei einem hohen Roboter-Schwerpunkt. Ein weiteres Beispiel für eine Bewegung, welche durch das Sicherheitsmodul 150 verhindert werden kann, ist das Befahren einer stark geneigten Rampe. Das Sicherheitsmodul 150 kann beispielsweise eine weitere Vorwärtsbewegung des Roboters 100 verhindern, wenn sich der Roboter um mehr als einen vorgegebenen Winkel gegenüber der Horizontalen neigt. Dieser Neigungswinkel kann von der Höhe des Roboter-Schwerpunkts abhängig sein.

Es können jedoch Situationen auftreten, in welchen der Roboter 100 unvorhergesehen in eine instabile Lage gerät und kippt. Beispielsweise kann der Roboter stehen bleiben um eine Person passieren zu lassen und hierbei einen Stoß versetzt bekommen. Eine dem Stoß entsprechende selbsttätige Bewegung des Roboters 100 kann ein Umkippen des Roboters 100 verhindern. Das Sicherheitsmodul 150 kann beispielsweise dazu ausgebildet sein, anhand einer Beschleunigungs- und Lagemessung einen solchen Stoß zu erkennen und kann daraufhin prüfen, ob das Steuermodul 140 ein dem Stoß angepasstes Steuerkommando aussendet. Die Steuerkommandos "nichts tun" oder "anhalten" können dabei beispielsweise als gefährlich eingestuft werden, da grundsätzlich eine Bewegung des Roboters 100 notwendig ist, um einen Stoß auszugleichen, und den Roboter 100 zu stabilisieren. Das Sicherheitsmodul 150 kann beispielsweise dazu ausgebildet sein zu detektieren, dass ein Abwarten der Reaktion des Steuermoduls 140 zu viel Zeit beansprucht und, ohne auf die Reaktion des Steuermoduls 140 zu warten, Steuerkommandos an das Antriebsmodul 170 senden, welche eine dem Stoß angepasste Bewegung des Roboters 100 nach sich ziehen. Erkennt das Sicherheitsmodul 150, dass das Steuermodul 140 gar nicht oder falsch auf den Stoß reagiert, kann es Steuerkommandos für eine dem Stoß angepasste Bewegung an das Antriebsmodul 170 senden.

Das Sicherheitsmodul 150 kann weiterhin dazu ausgebildet sein, eine Funktion des Arbeitsmoduls 160 zu überwachen. Dies kann insbesondere dann vorteilhaft sein, wenn die Tätigkeit des Arbeitsmoduls 160 mit einer größeren Bewegung des Arbeitsmoduls 160 selbst und/oder einer Bewegung des Roboters 100 durch das Antriebsmodul 170 verbunden ist.

Das Arbeitsmodul 160 kann beispielsweise eine Bürste zum Sammeln von Schmutz aufweisen. Hierbei besteht grundsätzlich die Gefahr, dass die sich drehende Bürste beispielsweise Schnürsenkel von herumstehenden Schuhen, Teppichfransen oder Kabel von Elektrogeräten aufwickelt und dadurch blockiert wird. Die Drehung der Bürste kann beispielsweise mittels eines Drehzahl-Encoders gemessen werden. Eine blockierte Bürste kann dann detektiert werden, wenn keine Drehung der Bürste mehr detektiert werden kann. Es ist beispielsweise auch möglich, die elektrische Leistungsaufnahme des Bürstenmotors zu bestimmen und dadurch eine blockierte Bürste zu detektieren.

Es sind verschiedene Verfahren bekannt, um eine blockierte Bürste zu befreien. Beispielsweise kann das Steuermodul 140 die Bürste in einen Leerlauf schalten und den Roboter 100 eine Rückwärtsbewegung ausführen lassen, bei welcher sich das Kabel, o.ä., wieder abwickelt. Dieses Vorgehen birgt jedoch Gefahren. Bewegungen des Roboters 100 bei blockierter Bürste können grundsätzlich zu Unfällen führen. Ist das auf der Bürste aufgewickelte Kabel beispielsweise das Kabel eines elektrischen Gerätes, besteht grundsätzlich die Gefahr, dass der Roboter das elektrische Gerät bei einer Rückwärtsfahrt mit sich zieht. Ist das elektrische Gerät auf einer erhöhten Position, beispielsweise in einem Regal angeordnet, kann dieses dadurch auf den Boden fallen und beschädigt werden. Das Sicherheitsmodul 150 kann daher beispielsweise dazu ausgebildet sein zu erkennen, ob die Bürste weiterhin blockiert, wenn ein Verfahren zum Befreien der Bürste durchgeführt wird. Die Bewegung des Roboters 100 kann in einem solchen Fall beispielsweise angehalten werden, da weder eine Vorwärts- noch eine Rückwärtsbewegung möglich ist, ohne Gegenstände zu beschädigen. Eine weitere Möglichkeit besteht darin, die Bürste in eine der normalen Bewegungsrichtung entgegengesetzten Richtung zu drehen, um das Kabel, o.ä., aus der Bürste zu befreien, ohne dass dabei der Roboter 100 seine Position verändert.

## Patentansprüche

1. Autonomer mobiler Roboter (100) mit:
einem Antriebsmodul (170), das dazu ausgebildet ist den Roboter (100) durch eine Umgebung zu bewegen;
einem Arbeitsmodul (160), das dazu ausgebildet ist, eine Bodenfläche zu bearbeiten oder den Transport von Gegenständen durchzuführen;
einem Steuermodul (140), das dazu ausgebildet ist, Steuerkommandos an das Antriebsmodul (170) oder an das Arbeitsmodul (160) zu senden, wobei die Steuerkommandos dazu ausgebildet sind, die Bewegung bzw. Aufgaben des Roboters (100) zu steuern; und
einem Sicherheitsmodul (150), das dazu ausgebildet ist:
das Roboterverhalten unabhängig von dem Steuermodul (140) zu überwachen;
eine Gefahrensituation zu detektieren indem eine aktuelle, vom Steuermodul (140) gesteuerte Bewegung des Roboters (100) anhand von vorgegebenen Kriterien als gefährlich eingestuft wird; und
wenn das Sicherheitsmodul erkennt, dass der Roboter (100) eine als gefährlich eingestufte Bewegung ausführt, Steuerkommandos des Steuermoduls mit Steuerkommandos des Sicherheitsmoduls zu überschreiben, wobei Steuerkommandos des Sicherheitsmoduls Richtungs- und/oder Geschwindigkeits-Kommandos aufweisen, welche den Roboter dazu veranlassen, seine Richtung zu ändern und/oder seine Geschwindigkeit zu verringern; und
wenn das Sicherheitsmodul erkennt, dass der Roboter (100) eine als gefährlich eingestufte Bewegung ausführt, die Bewegung des Roboters (100) mit den Steuerkommandos vom Sicherheitsmodul (150) zu ändern.

2. Roboter (100) gemäß Anspruch 1, wobei das Sicherheitsmodul (150) weiterhin dazu ausgebildet ist:
das von dem Steuermodul (140) bewirkte Verhalten des Roboters (10) in einer Situation, die von dem Sicherheitsmodul (150) als Gefahrensituation erkannt wurde, zu überwachen, und
dieses Verhalten anhand von vorgegebenen Kriterien als angemessen oder nicht angemessen einzustufen.

3. Roboter (100) gemäß Anspruch 2, wobei das Überwachen der Reaktion des Steuermoduls (140) das Auswerten der vom Steuermodul (140) ausgesendeten Steuerkommandos aufweist, wobei aus den Steuerkommandos auf eine aktuelle Bewegung des Roboters (100) geschlossen werden kann.

4. Roboter (100) gemäß einem der Ansprüche 2 bis 3, wobei das Überwachen der Reaktion des Steuermoduls (140) das Empfangen von Informationen vom Antriebsmodul (170) aufweist, wobei die Informationen wenigstens eines von
an das Antriebsmodul (170) gesendete Steuerkommandos, und
eine aktuelle Bewegung des Antriebsmoduls (170) aufweisen.

5. Roboter (100) gemäß einem der Ansprüche 2 bis 4, wobei das Sicherheitsmodul (150) dazu ausgebildet, die Bewegung des Roboters (100) nur dann zu ändern, wenn die Bewegung als gefährlich eingestuft wird und die Reaktion des Steuermoduls (140) als nicht angemessen eingestuft wird.

6. Roboter (100) gemäß einem der Ansprüche 1 bis 5, wobei der Roboter (100) weiterhin ein Sensormodul (120) aufweist, das dazu ausgebildet ist, Informationen bereitzustellen, welche wenigstens eines von
einem internen Zustand des Roboters (100), und
die Umgebung des Roboters (100) betreffen,
wobei das Sicherheitsmodul (150) weiterhin dazu ausgebildet ist, den Betrieb des Sensormoduls (120) zu überwachen und den Roboter (100) anzuhalten, wenn der Betrieb des Sensormoduls (120) als fehlerhaft erkannt wird.

7. Roboter (100) gemäß Anspruch 6, wobei das Sensormodul (120) wenigstens einen Bodenabstandssensor (121) aufweist, der dazu ausgebildet ist, eine Absturzkante am Boden zu detektieren, wobei für die Detektion einer Absturzkante der wenigstens eine Bodenabstandssensor (121) dazu ausgebildet ist, zu bestimmen, ob ein Abstand zwischen dem Roboter (100) und dem unter dem Roboter (100) befindlichen Boden einen Maximalwert nicht übersteigt, oder einen Abstand zwischen dem Roboter (100) und dem unter dem Roboter (100) befindlichen Boden zu messen, wobei das Sicherheitsmodul (150) dazu ausgebildet ist, eine Gefahrensituation basierend auf von dem mindestens einen Bodenabstandssensor (121) gelieferten Informationen zu detektieren und/oder wobei das Sicherheitsmodul (150) dazu ausgebildet ist, basierend auf von dem mindestens einen Bodenabstandssensor (121) gelieferten Informationen die aktuelle Bewegung des Roboters (100) als nicht angemessen einzustufen.

8. Roboter (100) gemäß einem der Ansprüche 6 oder 7, wobei das Sensormodul (120) wenigstens eine inertiale Messeinheit aufweist die dazu ausgebildet ist, wenigstens eines von
einer Beschleunigung, und
einer Winkelgeschwindigkeit der inertialen Messeinheit zu detektieren, wobei das Sicherheitsmodul (150) dazu ausgebildet ist,
anhand der Beschleunigung und/oder der Winkelgeschwindigkeit der inertialen Messeinheit eine Stabilität des Roboters (100) zu bestimmen und als gefährdet oder nicht gefährdet einzustufen, und
die Bewegung des Roboters (100) zu ändern oder zu stoppen wenn die Stabilität des Roboters (100) als gefährdet eingestuft wird.

9. Roboter (100) gemäß einem der Ansprüche 6 bis 8, wobei das Sicherheitsmodul (150) weiterhin dazu ausgebildet ist, eine Gefahrensituation wenigstens anhand eines von
der vom Sensormodul (120) bereitgestellten Informationen, und
in der Karte der Umgebung enthaltenen Informationen zu detektieren.

10. Roboter (100) gemäß einem der Ansprüche 1 bis 9, wobei das Sicherheitsmodul (150) dazu ausgebildet ist, das Steuermodul (140) zu informieren, wenn das Sicherheitsmodul (150) eine Bewegung des Roboters (100) ändert.

11. Roboter (100) gemäß einem der Ansprüche 1 bis 10, wobei das Ändern einer Bewegung des Roboters (100) durch das Sicherheitsmodul (150) das Überstimmen der vom Steuermodul (140) an das Antriebsmodul (170) ausgesendeten Steuerkommandos aufweist.

12. Roboter (100) gemäß einem der Ansprüche 1 bis 11, wobei das Sicherheitsmodul (150) dazu ausgebildet ist,
Hindernisse in der Umgebung des Roboters (100) zu detektieren, und
eine maximal zulässige Geschwindigkeit des Roboters (100) zu verringern, wenn ein Hindernis in der Umgebung des Roboters (100) detektiert wird.

13. Verfahren zum Steuern eines autonomen mobilen Roboters (100), wobei das Verfahren aufweist:
Steuern einer Bewegung oder einer Aufgabe des Roboters (100) durch ein Steuermodul (140), wobei das Steuern der Bewegung das Senden von Steuerkommandos vom Steuermodul (140) an ein Antriebsmodul (170) aufweist, wobei das Antriebsmodul (170) dazu ausgebildet ist, den Roboter (100) durch eine Umgebung zu bewegen, wobei das Steuern der Aufgabe das Senden von Steuerkommandos vom Steuermodul (140) an ein Arbeitsmodul (160) aufweist, wobei das Arbeitsmodul (160) dazu ausgebildet ist, eine Bodenfläche zu bearbeiten oder den Transport von Gegenständen durchzuführen;
Überwachen des Roboterverhaltens mittels eines Sicherheitsmoduls (150) unabhängig von dem Steuermodul (140);
Detektieren einer Gefahrensituation mittels des Sicherheitsmoduls (150), indem eine aktuelle vom Steuermodul gesteuerte Bewegung des Roboters anhand von vorgegebenen Kriterien als gefährlich eingestuft wird; und
wenn das Sicherheitsmodul erkennt, dass der Roboter eine als gefährlich eingestufte Bewegung ausführt, Überschreiben von Steuerkommandos des Steuermoduls mit Steuerkommandos des Sicherheitsmoduls, wobei Steuerkommandos des Sicherheitsmoduls Richtungs- und/oder Geschwindigkeits-Kommandos aufweisen, welche den Roboter dazu veranlassen, seine Richtung zu ändern und/oder seine Geschwindigkeit zu verringern, und, wenn das Sicherheitsmodul erkennt, dass der Roboter eine als gefährlich eingestufte Bewegung ausführt, Ändern der Bewegung des Roboters mit den Steuerkommandos vom Sicherheitsmodul.

14. Verfahren gemäß Anspruch 13, das weiter aufweist:
Überwachen einer Reaktion des Steuermoduls (140) auf eine erkannte Gefahrensituation hin, und
Einstufen der Reaktion des Steuermoduls (140) anhand von vorgegebenen Kriterien als angemessen oder nicht angemessen.

15. Verfahren gemäß einem der Ansprüche 13 oder 14, das weiter aufweist:
Benachrichtigen des Steuermoduls (140), wenn das Sicherheitsmodul (150) eine Gefahrensituation detektiert hat, oder eine Bewegung des Roboters (100) ändert.

## Claims

1. An autonomous mobile robot (100) with:
a drive module (170) configured to move the robot (100) through surroundings;
a work module (160) configured to treat a floor surface or to carry out transport of objects;
a control module (140) configured to send control commands to the drive module (170) or to the work module (160), wherein the control commands are configured to control movement and tasks of the robot (100), respectively; and
a safety module (150) configured to:
monitor robot behavior independently of the control module (140) ;
detect a dangerous situation by classifying a current movement of the robot (100) controlled by the control module (140) as dangerous on the basis of specified criteria; and
if the safety module recognizes that the robot (100) is executing a movement classified as dangerous, overwrite control commands of the control module with control commands of the safety module, wherein control commands of the safety module comprise direction and/or speed commands which cause the robot to change its direction and/or to decrease its speed;
and,
if the safety module recognizes that the robot (100) is executing a movement classified as dangerous, change the movement of the robot (100) with the control commands from the safety module (150).

2. The robot (100) according to claim 1, wherein the safety module (150) is further configured to:
monitor the behavior of the robot (10) effected by the control module (140) in a situation which the safety module (150) has recognized as a dangerous situation, and
classify this behavior as appropriate or inappropriate on the basis of specified criteria.

3. The robot (100) according to claim 2, wherein monitoring the response of the control module (140) comprises evaluating the control commands sent out by the control module (140), the control commands allowing to infer a current movement of the robot (100).

4. The robot (100) according to any one of claims 2 to 3, wherein monitoring the response of the control module (140) comprises receiving information from the drive module (170), the information comprising at least one of
control commands sent to the drive module (170), and
a current movement of the drive module (170).

5. The robot (100) according to any one of claims 2 to 4, wherein the safety module (150) is configured to change the movement of the robot (100) only if the movement is classified as dangerous and the response of the control module (140) is classified as inappropriate.

6. The robot (100) according to any one of claims 1 to 5, wherein the robot (100) further comprises a sensor module (120) configured to provide information relating to at least one of
an internal state of the robot (100), and
the surroundings of the robot (100),
wherein the safety module (150) is further configured to monitor the operation of the sensor module (120) and to bring the robot (100) to a halt if the operation of the sensor module (120) is recognized to be faulty.

7. The robot (100) according to claim 6, wherein the sensor module (120) comprises at least one floor clearance sensor (121) configured to detect a falling edge on the floor, wherein for detection of a falling edge, the at least one floor clearance sensor (121) is configured to determine whether a clearance between the robot (100) and the floor located under the robot (100) does not exceed a maximum value, or to measure a clearance between the robot (100) and the floor located under the robot (100), wherein the safety module (150) is configured to detect a dangerous situation based on information supplied by the at least one floor clearance sensor (121) and/or wherein the safety module (150) is configured to, based on information supplied by the at least one floor clearance sensor (121), classify the current movement of the robot (100) as inappropriate.

8. The robot (100) according to any one of claims 6 or 7, wherein the sensor module (120) comprises at least one inertial measurement unit configured to detect at least one of
an acceleration, and
an angular velocity of the inertial measurement unit, wherein the safety module (150) is configured to,
on the basis of the acceleration and/or the angular velocity of the inertial measurement unit, determine a stability of the robot (100) and classify it as endangered or not endangered, and
change or stop the movement of the robot (100) if the stability of the robot (100) is classified as endangered.

9. The robot (100) according to any one of claims 6 to 8, wherein the safety module (150) is further configured to detect a dangerous situation at least on the basis of one of
the information provided by the sensor module (120), and
information contained in the map of the surroundings.

10. The robot (100) according to any one of claims 1 to 9, wherein the safety module (150) is configured to inform the control module (140) when the safety module (150) changes a movement of the robot (100).

11. The robot (100) according to any one of claims 1 to 10, wherein changing a movement of the robot (100) by the safety module (150) comprises overruling the control commands sent out by the control module (140) to the drive module (170).

12. The robot (100) according to any one of claims 1 to 11, wherein the safety module (150) is configured to
detect obstacles in the surroundings of the robot (100), and
decrease a maximum permissible speed of the robot (100) when an obstacle is detected in the surroundings of the robot (100) .

13. A method for controlling an autonomous mobile robot (100), the method comprising:
controlling a movement or a task of the robot (100) by a control module (140), wherein controlling the movement comprises sending control commands from the control module (140) to a drive module (170), the drive module (170) configured to move the robot (100) through surroundings, wherein controlling the task comprises sending control commands from the control module (140) to a work module (160), the work module (160) configured to treat a floor surface or to carry out transport of objects;
monitoring robot behavior by means of a safety module (150) independently of the control module (140);
detecting a dangerous situation by means of the safety module (150) by classifying a current movement of the robot controlled by the control module as dangerous on the basis of specified criteria; and,
if the safety module recognizes that the robot is executing a movement classified as dangerous, overwriting control commands of the control module with control commands of the safety module, wherein control commands of the safety module comprise direction and/or speed commands which cause the robot to change its direction and/or to decrease its speed, and, if the safety module recognizes that the robot is executing a movement classified as dangerous, changing the movement of the robot with the control commands from the safety module.

14. The method according to claim 13, further comprising:
monitoring a response of the control module (140) to a recognized dangerous situation, and
classifying the response of the control module (140) as appropriate or inappropriate on the basis of specified criteria.

15. The method according to any one of claims 13 or 14, further comprising:
notifying the control module (140) when the safety module (150) has detected a dangerous situation or changes a movement of the robot (100).

## Revendications

1. Robot mobile autonome (100) avec :
un module d'entraînement (170) configuré pour déplacer le robot (100) dans un environnement ;
un module de travail (160) configuré pour traiter une surface de sol ou pour effectuer le transport d'objets ;
un module de commande (140) configuré pour envoyer des instructions de commande au module d'entraînement (170) ou au module de travail (160), dans lequel les instructions de commande sont configurées pour commander le mouvement ou les tâches du robot (100) ; et
un module de sécurité (150) configuré pour :
surveiller le comportement du robot indépendamment du module de commande (140) ;
détecter une situation dangereuse en classant un mouvement en cours du robot (100) commandé par le module de commande (140) comme dangereux sur la base de critères prédéterminés ; et
si le module de sécurité détecte que le robot (100) exécute un mouvement classé comme dangereux, remplacer les instructions de commande du module de commande par des instructions de commande du module de sécurité, dans lequel les instructions de commande du module de sécurité ont des instructions de direction et/ou de vitesse qui ordonnent au robot de changer de direction et/ou de réduire sa vitesse ;
et
si le module de sécurité détecte que le robot (100) effectue un mouvement classé comme dangereux, modifier le mouvement du robot (100) avec les instructions de commande du module de sécurité (150).

2. Robot (100) selon la revendication 1, dans lequel le module de sécurité (150) est en outre configuré pour :
surveiller le comportement du robot (10) induit par le module de commande (140) dans une situation que le module de sécurité (150) a détectée comme une situation dangereuse, et
classer ce comportement comme approprié ou inapproprié sur la base de critères prédéterminés.

3. Robot (100) selon la revendication 2, dans lequel la surveillance de la réaction du module de commande (140) comprend l'évaluation des instructions de commande émises par le module de commande (140), dans lequel un mouvement en cours du robot (100) peut être déduit des instructions de commande.

4. Robot (100) selon l'une des revendications 2 à 3, dans lequel la surveillance de la réaction du module de commande (140) comprend la réception d'informations du module d'entraînement (170), dans lequel les informations comprennent au moins l'une des instructions de commande envoyées au module d'entraînement (170), et un mouvement en cours du module d'entraînement (170).

5. Robot (100) selon l'une des revendications 2 à 4, dans lequel le module de sécurité (150) est configuré pour modifier le mouvement du robot (100) uniquement si le mouvement est classé comme étant dangereux et la réaction du module de commande (140) est classée comme étant inappropriée.

6. Robot (100) selon l'une des revendications 1 à 5, dans lequel le robot (100) comprend en outre un module de capteur (120) configuré pour fournir des informations concernant au moins l'un
d'un état interne du robot (100), et
de l'environnement du robot (100),
dans lequel le module de sécurité (150) est en outre configuré pour surveiller le fonctionnement du module de capteur (120) et pour arrêter le robot (100) si le fonctionnement du module de capteur (120) est détecté comme défectueux.

7. Robot (100) selon la revendication 6, dans lequel le module de capteur (120) comporte au moins un capteur de distance au sol (121) configuré pour détecter un bord de chute au sol, dans lequel, pour la détection d'un bord de chute, l'au moins un capteur de distance au sol (121) est configuré pour déterminer si une distance entre le robot (100) et le sol situé sous le robot (100) ne dépasse pas une valeur maximale, ou pour mesurer une distance entre le robot (100) et le sol situé sous le robot (100), dans lequel le module de sécurité (150) est configuré pour détecter une situation dangereuse à partir d'informations fournies par l'au moins un capteur de distance au sol (121) et/ou dans lequel le module de sécurité (150) est configuré pour, sur la base des informations fournies par l'au moins un capteur de distance au sol (121), classer le mouvement en cours du robot (100) comme inapproprié.

8. Robot (100) selon l'une des revendications 6 ou 7, dans lequel le module de capteur (120) comporte au moins une unité de mesure inertielle qui est configurée pour détecter au moins l'une d'une accélération, et d'une vitesse angulaire de l'unité de mesure inertielle, dans lequel le module de sécurité (150) est configuré pour déterminer une stabilité du robot (100) sur la base de l'accélération et/ou de la vitesse angulaire de l'unité de mesure inertielle et pour la classer comme en danger ou non en danger, et
modifier ou arrêter le mouvement du robot (100) si la stabilité du robot (100) est classée comme en danger.

9. Robot (100) selon l'une des revendications 6 à 8, dans lequel le module de sécurité (150) est en outre configuré pour détecter une situation dangereuse au moins sur la base de l'une des informations fournies par le module de capteur (120), et
des informations contenues dans la carte de l'environnement.

10. Robot (100) selon l'une des revendications 1 à 9, dans lequel le module de sécurité (150) est configuré pour informer le module de commande (140) lorsque le module de sécurité (150) change un mouvement du robot (100).

11. Robot (100) selon l'une des revendications 1 à 10, dans lequel le changement d'un mouvement du robot (100) par le module de sécurité (150) comprend l'annulation des instructions de commande envoyées par le module de commande (140) au module d'entraînement (170).

12. Robot (100) selon l'une des revendications 1 à 11, dans lequel le module de sécurité (150) est configuré pour
détecter des obstacles à proximité du robot (100), et
réduire une vitesse maximale autorisée du robot (100) lorsqu'un obstacle est détecté à proximité du robot (100).

13. Procédé de commande d'un robot mobile autonome (100), dans lequel le procédé comprend :
la commande d'un mouvement ou d'une tâche du robot (100) par un module de commande (140), dans lequel la commande du mouvement comporte l'envoi d'instructions de commande du module de commande (140) à un module d'entraînement (170), dans lequel le module d'entraînement (170) est configuré pour déplacer le robot (100) dans un environnement, dans lequel la commande de la tâche comprend l'envoi de commandes du module de commande (140) à un module de travail (160), dans lequel le module de travail (160) est configuré pour traiter une surface de sol ou pour effectuer le transport d'objets ;
la surveillance du comportement du robot à l'aide d'un module de sécurité (150) indépendant du module de commande (140) ;
la détection d'une situation dangereuse au moyen du module de sécurité (150), en ce qu'un mouvement en cours du robot commandé par le module de commande est classé comme dangereux sur la base de critères prédéterminés ; et
si le module de sécurité détecte que le robot effectue un mouvement classé comme dangereux, le remplacement des instructions de commande du module de commande avec les instructions de commande du module de sécurité, dans lequel les instructions de commande du module de sécurité ont des instructions de direction et/ou de vitesse qui font changer sa direction et/ou réduire sa vitesse et, si le module de sécurité détecte que le robot effectue un mouvement classé comme dangereux, la modification du mouvement du robot avec les instructions de commande du module de sécurité.

14. Procédé selon la revendication 13, comprenant en outre :
la surveillance d'une réponse du module de commande (140) à une situation dangereuse détectée, et
le classement de la réponse du module de commande (140) comme appropriée ou inappropriée sur la base de critères prédéterminés.

15. Procédé selon l'une des revendications 13 ou 14, comprenant en outre :
la notification au module de commande (140) lorsque le module de sécurité (150) a détecté une situation dangereuse ou changé un mouvement du robot (100).
